(19) Europäisches Patentamt
European Patent Office
Office européen des brevets

(11) EP 2 521 083 A1

(12) EUROPEAN PATENT APPLICATION

(43) Date of publication:
07.11.2012 Bulletin 2012/45

(51) Int Cl.:
*G06Q 30/06* (2012.01)

(21) Application number: 12166062.5

(22) Date of filing: 27.04.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 03.05.2011 US 201113099661

(71) Applicant: General Electric Company
Schenectady, NY 12345 (US)

(72) Inventors:
• Pandey, Achalesh Kumar
Greenville SC 29615 (US)

• Asati, Mahesh Kumar
560066 Bangalore Karnataka (IN)
• Mannar, Kamal
Atlanta GA 30339 (US)
• Nallamotu, Durgaprasad
Atlanta GA 30339 (US)

(74) Representative: Cleary, Fidelma
GE International Inc.
Global Patent Operation-Europe
15 John Adam Street
London WC2N 6LU (GB)

(54) **Automated system and method for implementing unit and collective level benchmarking of power plant operations**

(57) Systems and methods for implementing benchmarking analysis (168) for power plant operations comprise electronically accessing power plant operational data (166) within at least one type of operation within a power plant, electronically analyzing data from one or more power plant components within one or more different power plant units in one or more collections of multiple power plant units to identify cycles and key events on one or more of a component level (220), a unit level (230) and a collective level of multiple power plants (240), generating at least one scorecard summary (252) of calculated power plant operational characteristics on selected levels of operation comprising one or more of a component level, unit level and collective level of power plant units, and providing the at least one scorecard summary as electronic output to a user. Additional optional steps include using the data from the scorecard summary to detect outliers (262) and/or to cluster (264) selected components, units or fleets having similar operational characteristics.

FIG. 2

## Description

FIELD OF THE INVENTION

The subject matter disclosed herein relates to systems and methods for implementing automated unit level and/or collective level benchmarking analysis within a power plant environment, and more particularly includes such particular features as scorecard generation, outlier detection and benchmarking visualization.

BACKGROUND OF THE INVENTION

Highly complex industrial operations such as implemented within a power plant environment often involve the sophisticated coordination of multiple machines and associated processes. Many of the industrial components within such a power plant environment may include sensors or other monitoring equipment in conjunction with a computing device so that the real-time conditions of such components can be electronically tracked. For example, some display panels within a power plant environment are capable of displaying various present plant operating conditions associated with the monitored respective components or processes within the plant.

The operational data for power plants described above is often available only in the form of a continuous time series. In other words, sensors constantly monitor a component and provide a non-stop flow of data such that an operator can observe real-time statistics of the present operational state of various plant components. To pick out specific plant operations from that data is a non-trivial matter.

Some known techniques are able to analyze specific plant operations only by undergoing a manual process of sorting and reviewing information on an ad hoc basis as necessary in response to a particular issue or concern. Such techniques typically involve manually mining reams of data to find particular plant operations and/or events, filtering through those operations/events to find ones that are relevant, extracting a few signals from the data, and then plotting them against one another. All of these lengthy and complex steps are normally done on an ad hoc basis, and typically have to be repeated for each issue as it arises. As such, a need remains to automate and streamline data analysis associated with the events occurring within a plant environment.

The ability to analyze historical data can also be difficult because of the sheer volume of information captured in conventional monitoring systems and limited ways to sort and access such data. Without ways to identify and store data associated with past operational events, an analyst may be forced to manually sort through extensive amounts of prior data to identify desired information. A need thus also remains for providing an ability to sort through and analyze historical power plant data and/or to provide meaningful comparisons of current data to historical data.

Still further, specific plant operations can be quite complex and variable, such that it is difficult to make useful comparisons among different instances of an operation. Analysis of plant operations by a human operator interacting with a data monitoring system can become increasingly difficult as the operator is required to mentally conceptualize and compare numerous abstract parameters associated with the plant environment. Also, visualizing plant operations, particularly visualizing more than one at a time, requires significant levels of arduous data manipulation. All of these realities are significant obstacles to characterizing and visualizing plant operations as part of any monitoring or improvement program. As such, a need also remains for electronic features designed to characterize and visualize data comparisons among power plants and operations thereof.

Yet another consideration in developing useful data analysis for power plant operations concerns how data associated with particular instances of an operation are compared with other similar data. It may often be useful to compare a given data set for a power plant operation with data associated with similar operations or with an ideal or preferred data set for that type of operation, sometimes referred to as an "entitlement curve." As such, a need remains to be able to quantify and characterize various operational parameters associated with a power plant to ideal performance levels, thus providing a benchmark for comparison. This need may also selectively apply to comparisons among different components within a particular power plant (e.g., different turbines in a particular power plant unit) or to comparisons among different units (e.g., different power plant units in a collective fleet, geographic area, or other collection of units.)

The art is continuously seeking improved systems and methods for electronically analyzing the conditions and parameters associated with the various components and operations within power plants.

BRIEF DESCRIPTION OF THE INVENTION

In one aspect, the present invention resides in a method of implementing benchmarking analysis for power plant operations includes a step of electronically accessing power plant operational data including one or more monitored parameters defining at least one type of operation within a power plant. The data from one or more power plant components within one or more different power plant units in one or more collections of multiple power plant units is electronically analyzed to identify cycles and key events on one or more of a component level, a unit level and a collective level of multiple power plant units. At least one scorecard summary of calculated power plant operational characteristics on selected levels of operation comprising one or more of a component level, unit level and collective level of multiple power plant units is generated and provided as electronic output to a user.

In another aspect, the invention resides in a power plant analysis and display system, including at least one processing device, at least one memory comprising computer-readable instructions for execution by the at least one processing device, and at least one output device. The at least one processing device is configured to electronically access power plant operational data including one or more monitored parameters defining at least one type of operation within a power plant, to electronically analyze data from one or more power plant components within one or more different power plant units in one or more collections of multiple power plant units to identify cycles and key events on one or more of a component level, a unit level and a collective level of multiple power plant units, and to generate at least one scorecard summary of calculated power plant operational characteristics on selected levels of operation comprising one or more of a component level, unit level and collective level of multiple power plant units. The at least one output device is configured to provide the at least one scorecard summary as electronic output to a user.

BRIEF DESCRIPTION OF THE DRAWINGS

Embodiments of the present invention will now be described, by way of example only, with reference to the accompanying drawings in which:

Fig. 1 is block diagram of exemplary hardware and software components within a power plant analysis system of the presently disclosed technology, including such components as the monitored hardware elements within a combined cycle (CC) power plant as well as the server and computer components that access the operational power plant data and characterize and display information in accordance with the disclosed techniques;

Fig. 2 is a flow chart of exemplary steps in a method of implementing benchmarking analysis for power plant operations;

Fig. 3 generally illustrates an exemplary scorecard generated in accordance with the aspects of the disclosed benchmarking analysis technology, particularly showing an exemplary scorecard for a plant startup operation;

Fig. 4 provides a first exemplary illustration of features associated with an outlier detection component of the subject benchmarking analysis application;

Fig. 5 provides a second exemplary illustration of features associated with an outlier detection component of the subject benchmarking analysis application;

Fig. 6 provides an exemplary illustration of features associated with an exemplary clustering analysis component of the subject benchmarking analysis application;

Fig. 7 is an exemplary illustration of a start type comparison analysis conducted in accordance with benchmarking and visualization aspects of the disclosed technology;

Fig. 8 is an exemplary illustration of a start cycle summary analysis conducted in accordance with benchmarking and visualization aspects of the disclosed technology;

Fig. 9 is an exemplary illustration of a plant hot start profile analysis conducted in accordance with benchmarking and visualization aspects of the disclosed technology;

Fig. 10 is an exemplary illustration of fleet level site specific statistics determined in accordance with benchmarking and visualization aspects of the disclosed technology;

Fig. 11 is an exemplary illustration of a map-based geographical visualization showing a collection of multiple power plants with selectable icons for providing more information about particular power plant units;

Fig. 12 is an exemplary block diagram of exemplary software modules within a specific scorecard and analysis application for power plant startups;

Fig. 13 is an exemplary illustration of a fleet scorecard visualization in accordance with selected embodiments of the disclosed technology;

Fig. 14 is an exemplary illustration of a yearly fired hours per fired start profile visualization in accordance with selected embodiments of the disclosed technology;

Fig. 15 is an exemplary illustration of an average hours, starts and trips visualization in accordance with selected embodiments of the disclosed technology;

Fig. 16 is an exemplary illustration of an average trips visualization in accordance with selected embodiments of the disclosed technology;

Fig. 17 is an exemplary illustration of an average load profile and average hours visualization in accordance with selected embodiments of the disclosed technology;

Fig. 18 is an exemplary illustration of a fleet level profile of starts and trips per 1000 fired hours in accordance with selected embodiments of the disclosed technology;

Fig. 19 is an exemplary illustration of a start time statistics visualization in accordance with selected embodiments of the disclosed technology;

Fig. 20 is an exemplary illustration of a startup reliability scorecard visualization in accordance with selected embodiments of the disclosed technology;

Fig. 21 is an exemplary illustration of an offline waterwash history and performance analysis visualization in accordance with selected embodiments of the disclosed technology;

Fig. 22 is a flow chart of exemplary steps in a method of analyzing startup cycles and reliability in accordance with selected embodiments of the disclosed technology;

Fig. 23 is an exemplary illustration of a clustering analysis visualization in accordance with aspects of the disclosed technology;

Fig. 24 is an exemplary illustration of a customer segmentation visualization associated with clustering analysis in accordance with aspects of the disclosed technology; and

Fig. 25 is an exemplary illustration of additional clustering analysis features in accordance with aspects of the disclosed technology.

DETAILED DESCRIPTION OF THE INVENTION

Reference is now made to particular embodiments of the invention, one or more examples of which are illustrated in the drawings. Each embodiment is presented by way of explanation of aspects of the invention, and should not be taken as a limitation of the invention. For example, features illustrated or described with respect to one embodiment may be used with another embodiment to yield a still further embodiment. It is intended that the present invention include these and other modifications or variations made to the embodiments described herein.

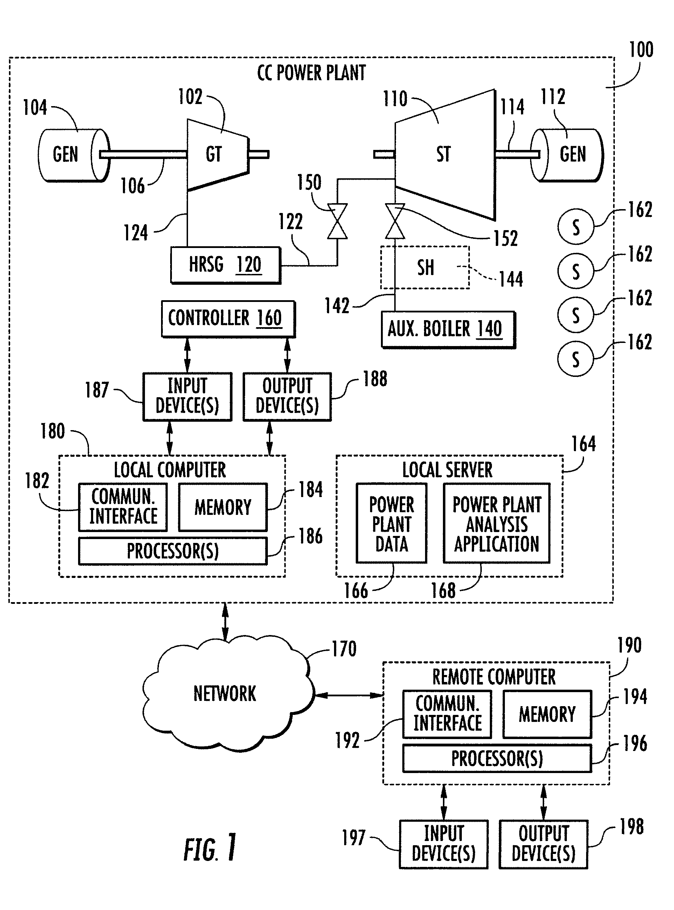

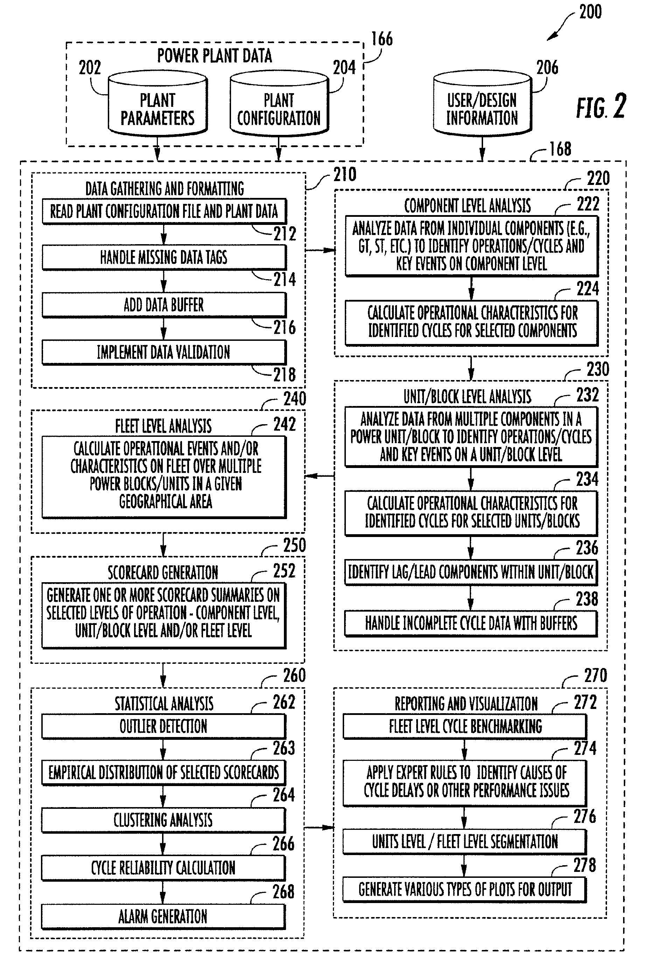

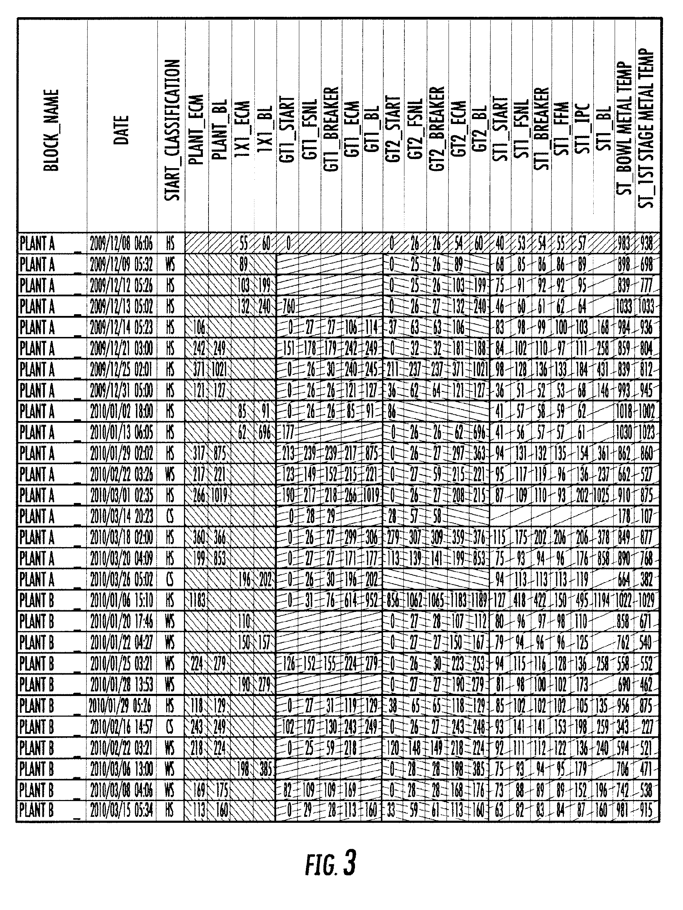

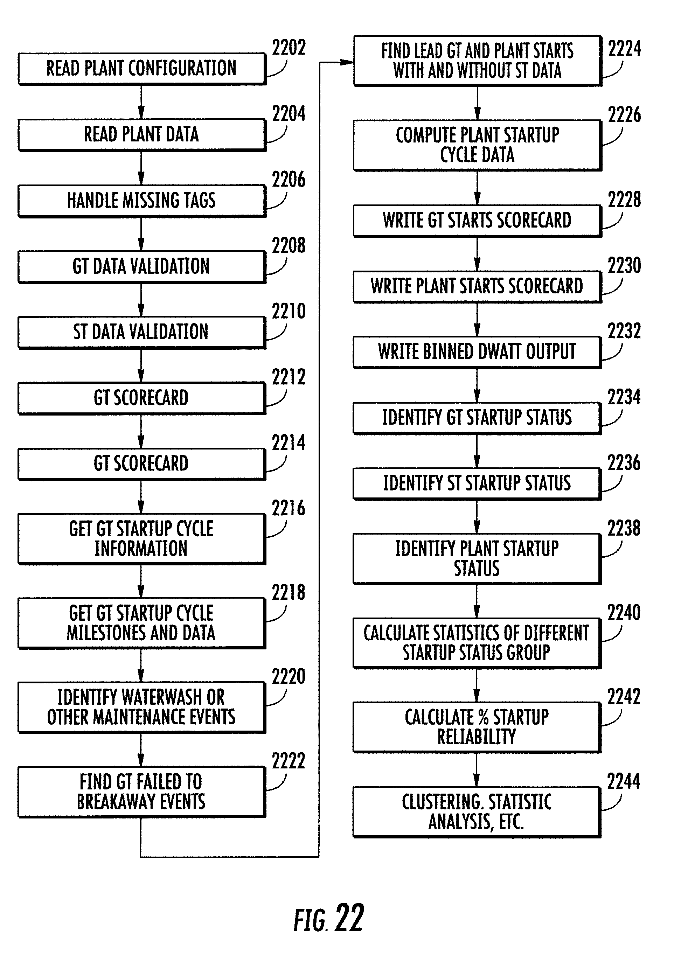

In general, Figs. 1-15 illustrate various aspects of the presently disclosed systems and methods for implementing benchmarking analysis for power plant operations. Fig. 1 illustrates various exemplary hardware and software components that may be used in one of the subject systems. Figs. 2 and 22 illustrate exemplary steps in a method of implementing exemplary aspects of the disclosed technology. Figs. 3-21 and 23-25, respectively, illustrate general examples of selected analysis, characterization and visualization features for power plant operations that may be implemented in accordance with various embodiments of the disclosed technology.

Referring now to Fig. 1, a primary physical component of a system for implementing aspects of the disclosed technology corresponds to a software package including a power plant analysis application 168. The power plant analysis application 168 is a software-based module comprising a set of computer-readable and executable instructions that are stored on a tangible computer-readable medium. In the example of Fig. 1, the power plant analysis application 168 is stored on a local server 164, server 164 being provided locally to one or more power plants, such as combined cycle (CC) power plant 100. Power plant analysis application 168 accesses and analyzes power plant data 166, such as may be received from a controller 160 interfaced with a plurality of sensors 162 that are provided within power plant 100 for tracking and capturing various monitored characteristics of power plant 100. It should be appreciated that although the power plant data 166 and power plant analysis application 168 are depicted in Fig. 1 as being stored at a local server location 164, the memory containing such computer-readable data and instructions may actually be located in a variety of locations local to or remote from a power plant.

Referring still to power plant analysis application 168, the computer-readable information stored within such software module includes various instructions for analyzing power plant measurement data in accordance with a variety of preconfigured definitions defining one or more power plant operations. Exemplary power plant operations may include but are not limited to starts, shutdowns, trips, load rejections, grid disturbances, fuel transfers, combustion mode transfers, islanded load steps, periods suitable for steady-state performance evaluation, loading, unloading, and transients affecting component life. Continuous real-time power plant data 166 that is received from the plurality of sensors 162 or other monitoring devices within power plant 100 are then processed relative to the preconfigured definitions mentioned above. Processing may include the various monitoring and benchmarking steps described in accordance with the presently disclosed technology, including but not limited to operation identification, characteristic determination, segmentation, scorecard generation, component level, unit level and fleet level analysis and visualizations, outlier detection, clustering analysis, alarm generation and reporting.

For example, referring still to Fig. 1, a user accessing the subject power plant analysis application 168 from a local computer 180 or a remote computer 190 linked via network 170 may be able to access preconfigured visualizations of various data associated with selected identified instances of a power plant operation. Such visualizations may be displayed or printed, for example, using one or more output devices 188, 198 provided at respective computers 180, 190. Computers 180, 190 may also include input devices (e.g., 187 and 197) to select specific types of desired modeling or analysis results for viewing, such that customized visualizations based on selectable user configurations are possible as described herein. Input device 187 and output device 188 associated with local computer 180 may also be configured to provide input and output features for the controller 160 or other devices located at the CC power plant 100.

Referring more particularly to Fig. 1, CC power plant 100 may include a variety of particular components, each having certain characteristics that may be monitored using the plurality of sensors 162 or other comparable monitoring equipment suitably provided to track parameters associated with the components of power plant 100. The data from such sensors 162 may then be interfaced to a user through controller 160. The physical components shown and described with reference to Fig. 1 are simplified to provide a descriptive example of the types of power plant components whose characteristics may be monitored to provide power plant data 166. As such, the components of Fig. 1 should in no way be considered a limiting feature of the presently disclosed technology.

In the exemplary embodiment of Fig. 1, power plant 100 includes one or more gas turbine(s) (GT) 102 coupled to a generator 104. A rotating shaft 106 operatively couples gas turbine 102 to generator 104 such that power can be generated from the turning of rotating shaft 106 by gas turbine 102. Power plant 100 also may include a steam turbine (ST) 110 coupled to a generator 112. A rotating shaft 114 operatively couples steam turbine 110 to generator 112 such that power can be generated from the turning of rotating shaft 114 by steam turbine 110. Although shown as separate generators 104, 112, it is possible that both turbines 102, 110 power the same generator.

Referring still to Fig. 1, a heat recovery steam generator (HRSG) 120 may be provided for generating a first steam flow 122 from exhaust 124 from gas turbine 102. That is, exhaust 124 from gas turbine 102 is used to heat water to generate a steam flow 122, which is applied to steam turbine 110. An auxiliary boiler 140 is operatively coupled to steam turbine 110 for producing a second steam flow 142 having characteristics appropriate for starting the steam turbine. Optionally, if necessary, a superheater (SH) 144 may be provided to superheat steam flow 142, e.g., from a saturated steam state created by auxiliary boiler 140. Exemplary power plant 100 of Fig. 1 also includes a first control valve 150 for controlling application of first steam flow 122 to steam turbine 110, and a second control valve 152 for controlling application of second steam flow 142 to the steam turbine.

A controller 160 controls operation of power plant 100 and, in particular, continuously operates the plant in a combined cycle during operation of gas turbine 102 by: starting steam turbine 110 by controlling second control valve 152 to apply second steam flow 142 from auxiliary boiler 140 to the steam turbine, then starting gas turbine 102 and HRSG 120, and then applying first steam flow 122 from HRSG 120 to the steam turbine.

Controller 160 may include a computerized control system electrically linked to each component and capable of controlling any mechanisms that control operation of each component, e.g., control valves 150, 152. Sensors 162 or other monitoring equipment may be coupled directly to selected components of power plant 100, or may be interfaced to such components through controller 160 or through other suitable interface mechanisms.

Referring still to Fig. 1, the data obtained from the various sensors 162 in power plant 100 may be provided to a local server 164. For example, the monitored data is represented in Fig. 1 as a database 166 within local server 164 that stores the power plant data. Although illustrated as a single module 166 for storing power plant data, it should be appreciated that multiple databases, servers, or other related computer or data storage devices may be used to store the monitored data from sensors 162. An additional memory module within local server 164 may correspond to the software instructions and definitions provided within power plant analysis application 168. The portions of the raw power plant data that are identified and characterized as corresponding to particular instances of a power plant operation and/or key events and or data segments within such instances may simply be tagged within the power plant data memory module 166 or may be extracted and stored in a different memory location (not shown).

Once the power plant analysis application 168 has automatically extracted power plant measurement data within various types of power plant operations, a user may be able to access and further manipulate such data by accessing features associated with the power plant analysis application 168 via either a local computer 180 or a remote computer 190, both of which may be coupled directly or indirectly via one or more wired or wireless connections to local server 164. Remote computers may be coupled via a network 170, which may correspond to any type of network, including but not limited to a dial-in network, a utility network, public switched telephone network (PSTN), a local area network (LAN), wide area network (WAN), local area network (LAN), wide area network (WAN), metropolitan area network (MAN), personal area network (PAN), virtual private network (VPN), campus area network (CAN), storage area network (SAN), the Internet, intranet or ethernet type networks, combinations of two or more of these types of networks or others, implemented with any variety of network topologies in a combination of one or more wired and/or wireless communication links.

Each computer 180, 190 may respectively include one or more communication interfaces 182, 192, one or more memory modules 184, 194 and one or more processing devices such as a microprocessor or the like 186, 196. Computing/processing device(s) 186, 196 may be adapted to operate as a special-purpose machine by executing the software instructions rendered in a computer-readable form stored in memory/media elements 184, 194. When software is used, any suitable programming, scripting, or other type of language or combinations of languages may be used to implement the teachings contained herein. In other embodiments, the methods disclosed herein may alternatively be implemented by hard-wired logic or other circuitry, including, but not limited to application-specific circuits.

Memory modules contained within local server 164, local computers 180 and/or remote computers 190 may be provided as a single or multiple portions of one or more varieties of computer-readable media, such as but not limited to any combination of volatile memory (e.g., random access memory (RAM, such as DRAM, SRAM, etc.) and nonvolatile memory (e.g., ROM, flash, hard drives, magnetic tapes, CD-ROM, DVD-ROM, etc.) or any other memory devices including diskettes, drives, other magnetic-based storage media, optical storage media, solid state storage media and others. Exemplary input device(s) 187, 197 may include but are not limited to a keyboard, touch-screen monitor, eye tracker, microphone, mouse and the like. Exemplary output device(s) 188, 198 may include but are not limited to monitors, printers or other devices for visually depicting output data created in accordance with the disclosed technology.

When remote computers are used to access the subject power plant analysis application 168, such application is provided as a network-based (i.e., web-based) portal for retrieving selected benchmarking features in a power plant environment. It is advantageous to provide web-based portals for customers such that customers can access the presently disclosed benchmarking features as well as related analytical information not only on a site-specific level, but also on one or more of a fleet, sub fleet, site, unit and component level. In some embodiments, the different levels of benchmarking analysis will be implemented accordingly based on the characteristics of a user of the power plant analysis application 168. For example, every user (e.g., a site user, a sub fleet user, a fleet level user responsibility for multiple utilities, etc.) can be provided a unique identifier for logging into the system that is hosting the subject application 168.

Access to various applications and data, as well as customization of the type of benchmarking analysis needed for a particular user can be automatically implemented based on the user login identification. For example, the subject application 168 can be configured to receive a user registration request, after which the system will either automatically or manually assign a unique identifier and password to the user. The user may also be required to fill out a registration form containing terms and conditions and/or questions related to a user's plant and/or fleet configuration. User access to the subject application 168 via the customized login can then facilitate user-specific interaction with the system. Generation and display of selected visualizations in accordance with the disclosed technology can also be customized based on the automated and/or preconfigured preferences of a user identified by the user's login to the system.

Referring now more particularly to Fig. 2, exemplary steps are presented in accordance with a method 200 for providing monitoring and benchmarking analysis for power plant operations. In general, the various steps provided as part of the method 200 in Fig. 2 may all be variously implemented as part of the subject power plant analysis application 168. Such processing steps may be applied to one or more or all of the parameters that are monitored and identified as part of the power plant measurement data 166. It should be appreciated that the power plant measurement data 166 illustrated in Fig. 2, particularly the plant parameters 202, may be provided by capturing a particular subset of information from the monitored parameter data that may be continuously available from the sensors within a power plant. Additional power plant data 166 may include data defining various identifying characteristics of a power plant, represented as plant configuration data 204.

Initial analysis may be conducted on the continuously streamed power plant data 166 to appropriately identify only portions of the data that correspond to particular instances of an operation. The types of operations may include but are not limited to one or more of starts, shutdowns, trips, load rejections, grid disturbances, fuel transfers, combustion mode transfers, islanded load steps, periods suitable for steady-state performance evaluation, loading, unloading, and transients affecting component life. As an example of initial analysis, consider a comparison of plant starts. In such example, the power plant measurement data may include parameter information only for the time spans that encompass a plurality of respective plant starts. Such instances may be identified, for example, by accessing continuous power plant operational data and comparing that data with preconfigured definitions that define parameter levels for when a given type of operation begins and ends and that define other key events within an operation. As such, only the parameter data for these particular time spans between the beginning and the end of an operational instance are needed and provided as part of the power plant measurement data. Such identified instances can be tagged with unique identifiers or time-bound indices for ready recall in future analysis steps.

Additional information provided to the subject power plant analysis application 168 may also include user/design information 206, which may include information that will be useful for comparing the power plant data to some other standard for benchmarking. For example, user/design information may include but is not limited to information such as fuel and electricity price information, forecasting models for applying data, preconfigured definitions defining power plant operations, key events and other segmentation within expected operation, emission versus load design values, and an entitlement curve or similar data defining ideal performance standards for the power plant environment.

The subject power plant monitoring and benchmarking analysis application 168 includes a plurality of different software modules adapted for execution by one or more processors accessing the application 168 to implement one or more processing steps. The exemplary software modules illustrated in Fig. 2 include a data gathering and formatting module 210, a component level analysis module 220, a unit/block level analysis module 230, a fleet level analysis module 240, a scorecard generation module 250, a statistical analysis module 260 and a reporting and visualization module 270. Although the example depicted in Fig. 2 displays a particular example of interaction among modules 210-270 and the flow of exemplary steps within such modules, it should be appreciated that the steps shown may be implemented in different orders and do not necessarily require all the steps and modules as illustrated.

A first exemplary module within the subject power plant monitoring and benchmarking analysis application 168 corresponds to the data gathering and formatting module 210. Such module may selectively implement one or more steps including but not limited to a step 212 of reading plant configuration file and plant data, a step 214 of handling missing data tags, a step 216 of adding a data buffer and a step 218 of implementing data validation.

In step 212, plant configuration information is read from the plant configuration database 204, and generally may include but is not limited to such information as the plant/site name, block number, number of turbines, frame type, HSRG type, shaft type, cycle type, data availability for different components, tag format and mapping, gas turbine and steam turbine design constants and various thresholds for analysis (e.g., benchmarking thresholds, entitlement curves and the like). Based on the configuration information read from the plant configuration database 204, desired tags and actual power plant parameters 202 for the power block(s) of interest are read. Depending on the ultimate analytical results desired by a user, the retrieved power plant data may be associated with one or more selected components within a power plant, one or more particular power plant units/blocks, or one or more fleets (preconfigured collections of power plant units). In step 214, missing data for any tags is handled to avoid any discrepancy in applying analysis rules. In step 216, any buffered data for incomplete operations (e.g., startup cycles) from previous runs may be added to data read for a current run. An optional data validation step indicated at step 218 may serve as a final check to make sure that data is available in a desired format for processing.

A second exemplary module within the subject power plant monitoring and benchmarking analysis application 168 corresponds to the component level analysis module 220. Exemplary steps within the component level analysis module 168 includes a step 222 of analyzing data from individual power plant components (e.g., respective gas turbine (GT) components, respective steam turbine (ST) components, exemplary heat recovery steam generator (HSRG) components, etc.) in order to identify power plant operations or cycles and key events on the component level. For example, consider the situation in which the components of a power plant are analyzed within startup cycles. In such example, rules for different key events for gas turbines and steam turbine, e.g., ignition, purging, acceleration, full speed no load, breaker close, emission compliance mode, base load, forward flow mode, vacuum pull, steam seals, etc. may be applied. Based on identification of the key events within the power plant data, it is possible to further identify particular instances of a type of power plant operation/ cycle. For example, startup cycles for each gas turbine may be identified using operation data and control logic tags. An additional step 224 involves calculating operational characteristics for identified cycles for selected components. For example, in a startup cycle, various calculations may be made for individual gas turbine components within a power plant, such as but not limited to hold time, non-running time, gas turbine and steam turbine milestones mentioned above, accumulated megawatt-hours (MWH) ratings and fuel consumption until desired milestone, emissions, etc. These component-level operational characteristics may ultimately be provided as part of a scorecard, fed to additional statistical analysis or provided as part of a generated visualization.

A third exemplary module within the subject power plant monitoring and benchmarking analysis application 168 corresponds to the unit/block level analysis module 230. A first exemplary step 232 implemented within unit/block level analysis module 230 includes analyzing data from multiple components in a power unit/ block to identify operations/cycles and key events on a unit/block level. For example, an entire power block may be analyzed to detect block level starts wherein no gas turbine is already running. Operational characteristics for identified cycles are calculated in step 234 for selected units/ blocks, similar to step 224. These unit-level operational characteristics may ultimately be provided as part of a scorecard, fed to additional statistical analysis or provided as part of a generated visualization. Specific characteristics that may be determined include an identification of leading and lagging components within a given power plant unit, as indicated at step 236. Sometimes, unit level block analysis module 230 may also require that incomplete cycle data is handled with corresponding data buffers, as indicated at step 238. In an example of such instances, raw data for any incomplete startup cycle wherein gas turbines failed to reach emission compliance mode is buffered for continuity purposes and handled in the next run of processing. It should be appreciated that additional steps may be taken for incomplete cycles (e.g., incomplete starts and associated data) whereby the incomplete cycles and associated data are dropped before writing the information to output files for subsequent further analysis to avoid duplication of data.

A fourth exemplary module within the subject power plant monitoring and benchmarking analysis application 168 corresponds to the fleet level analysis module 240, in which step 242 involves calculating operational events and/or characteristics on the fleet level of power plant organization. A "fleet" of power blocks/units corresponds to multiple power blocks/units in a given geographical area or within some other predetermined grouping of units, and often times indicates that a user is responsible for multiple utilities. These fleet-level operational characteristics may ultimately be provided as part of a scorecard, fed to additional statistical analysis or provided as part of a generated visualization.

It should be appreciated that the disclosed analysis can be conducted on different collections of power plants than just fleet level as indicated in module 240. For example, sub fleet level analysis may also be implemented and/or site level analysis and/or customer-specific analysis or any other preconfigured collections of power plant units can be statistically compared. Once the various component level, unit level and/or fleet level analysis has been conducted per modules 220, 230 and 240 of the subject monitoring and benchmarking application, additional analysis is conducted relative to the calculated operational characteristics on the component level, unit level and/or fleet level. One or more types of additional analysis are identified in the scorecard generation module, 250, statistical analysis module 260 and reporting and visualization module 270. One or more of the features and steps described with reference to such modules 250, 260 and 270 may be selectively implemented in different embodiments of the disclosed benchmarking analysis.

Referring now to scorecard generation module 250, step 252 involves generating one or more scorecard summaries on selected levels of operation - component level, unit/block level and/or fleet level. In component level scorecards, selected parameters associated with one or more particular component(s) in a power plant can be provided and selectively compared with corresponding components in other similar power plants and/or with an entitlement curve defining ideal performance levels for the one or more particular components. In unit level scorecards, selected parameters associated with one or more particular power plant units can be provided and selectively compared with other similar power plants and/or with an entitlement curve defining ideal performance levels for the one or more particular power plant unit. In fleet level scorecards, selected parameters associated with a fleet of power plants can be provided and selectively compared with corresponding fleets of power plants and/or with an entitlement curve defining ideal performance levels for the one or more particular fleets. In one example, a scorecard is generated for a combined cycle power plant as a whole and for individual gas turbines, steam turbines, HRSGs, condensers and other plant equipment components thereof. The scorecard generally includes a summary of identified characteristics for the particular component/unit/fleet as well as one or more statistical characterizations resulting from the identified characteristics.

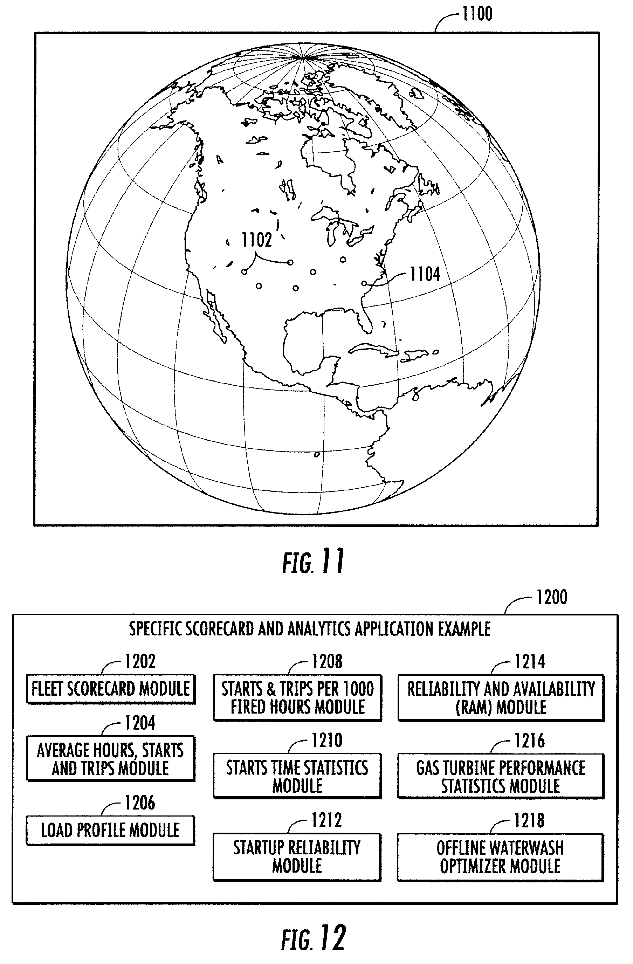

Scorecard generation implemented at step 252 in module 250 may be particularly advantageous for providing benchmarking information relative to combined cycle power plant startups and shutdowns. Every utility wants to start the plant faster to maximize its profit and reduce emission rate. As such, unit level and fleet level scorecards can relate to plant startup in near real time and can also help in identifying opportunities to improve the startup time. Similarly, tracking the shutdown operational profile of a power plant unit and/or fleet is also important to diagnose anomalies and abnormal operational conditions impacting component life (e.g. rotor, compressor, etc.) Additional details related to scorecard analytics and generation are discussed later with reference to Figs. 3 and 12.

Referring now to statistical analysis module 260, one or more additional statistical analysis steps may be implemented relative to the operational characteristics determined in steps 224, 234 and 242. Particular statistical analysis steps may variously include, but are not limited to outlier detection 262, empirical distribution of scorecards 263, clustering analysis 264, cycle reliability calculation 266, and alarm generation 268. The alarm generation in step 268 may be used, for example, to generate alarms if some non-optimal and/or anomalous behavior is observed during plant or unit operations, such as startup and shutdown. Alarm generation may be relayed in the form of audio, video and other control signals to a plant operator and/or a centralized monitoring location.

Referring now to reporting and visualization module 270, additional visualization and reporting steps may be implemented relative to the operational characteristics determined in steps 224, 234 and 242. Particular visualizations and reporting may selectively include fleet level cycle benchmarking per step 272, applying expert rules to identify data anomalies as well as the causes of such anomalies (e.g., cycle delays or other performance issues) per step 274, unit level and/or fleet level segmentation in step 276, and/or generating and providing various types of scorecards, data plots, reports or other analysis information as output to a user in step 278.

Examples of user output may be in the form of visualizations on a computer screen or other display device, as a printed document, or electronic message to a mobile device, remote computer, or other electronic component. Exemplary reports selectively provided as electronic output to a user in step 278 may include component-specific, unit-specific, plant-specific or fleet-specific reports, scorecards, summaries or the like. Additional exemplary visualizations selectively provided in step 278 may include overlap plots (e.g., single/multiple starts), correlation plots, 3D plots, box plots, interactive plots, scatter plots, matrix brushing, co-plots or other graphical formats. Examples of reporting information provided as part of unit/fleet level segmentation step 276 may include such characterization information as the operating mode of different components (e.g., GT, ST, HSRG, condenser, etc.), start definition for components, mission metrics related to reliability, performance and opflex, usage calculations, and engineering/statistics based features. In addition, clustering and classification techniques may be applied on the processed data in step 276 to segment plant or fleet level starts having similar operational characteristics and to identify improvement opportunities by providing recommendations.

Additional specific examples of characteristics that may be determined on the component, unit and/or fleet level in accordance with the disclosed technology include, but are not limited to, an identification of unit and plant level failed starts and calculation of startup reliability of individual unit, plant or fleet, an identification of lag and lead gas turbines by using controller data and expert rules, identification of the time to reach ignition, time from lead gas turbine to lag gas turbine reaching to emission compliance mode, the exposure history (hours spent in various bins, empirical distribution) for selected critical parameters (e.g. GT/ ST/ Plant MW, HRSG steam pressure, etc. for each start, calculation of a future startup profile by using startup forecasting models, fleet and unit level segmentation based upon frame type, hardware type, control software, geographical locations, and/or start type, and quantification of startup time variability for unit or fleet level startups and correlation with various operational parameters and hardware/software configurations.

Fig. 3 generally illustrates an exemplary scorecard generated in accordance with aspects of the disclosed benchmarking analysis technology, particularly showing an exemplary scorecard for a plant startup operation. In such example, the scorecard summary includes a plurality of time values characterizing the duration of time that respective power plant components and/or units spend in a given segment of operation as defined by identified key events within the operation. Although a scorecard can provide a variety of information desired by a user of the subject application, examples of potentially applicable scorecard information for a particular power plant startup include GT non-running time, GT start time, time to reach crank, time to reach ignition, warm up time, time to reach full speed no load (FSNL), time at FSNL, time from FSNL to 85% speed, time to reach synch, time to reach voltage matching, time on voltage matching, time to reach breaker close, time to reach emission compliance mode (plant, unit), hold time, time to reach IPS mode, unloading rate, time to reach flame off, time to coast down, etc. In addition, GT/ST/ plant loads can be binned into different categories, HSRG HP steam for each startup can be identified, and unit level and/or plant level failed starts can be identified.

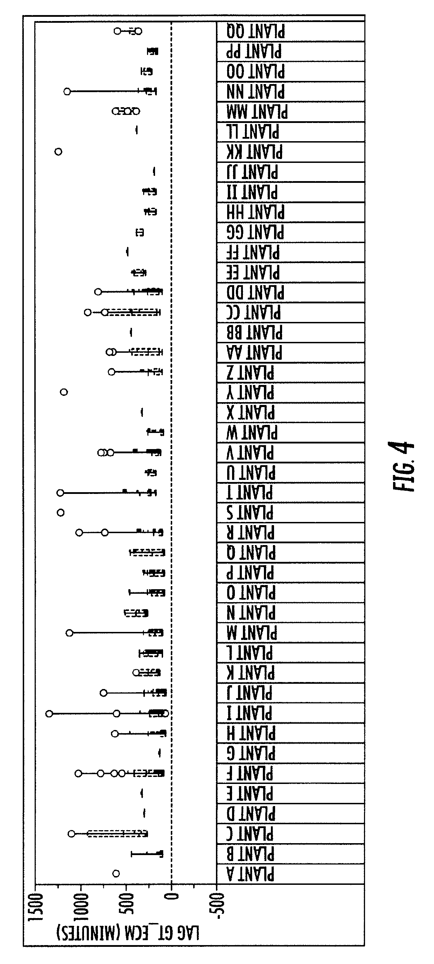

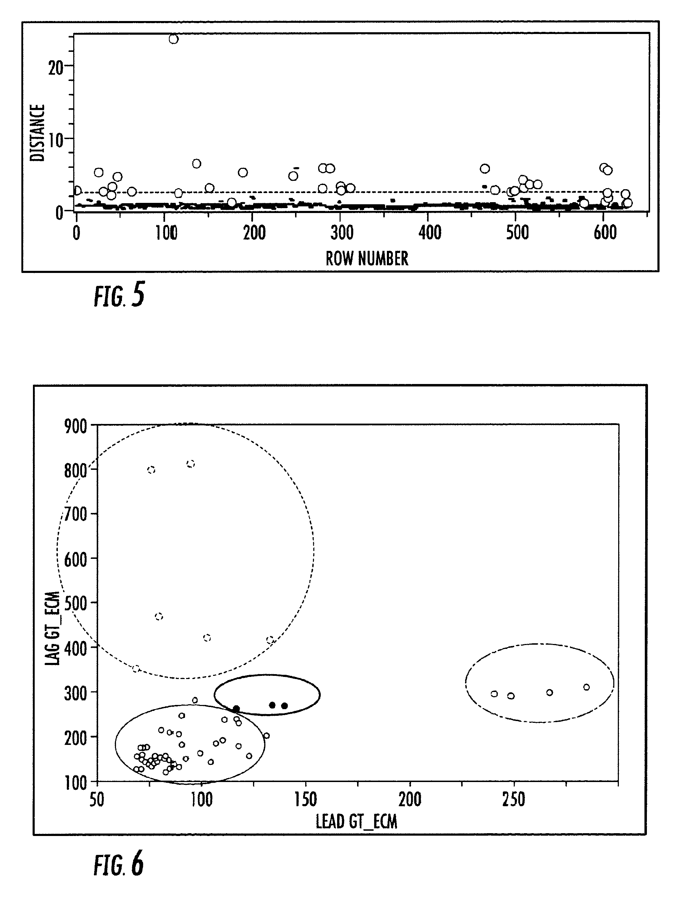

Referring now to Figs. 4 and 5, exemplary visualizations are provided corresponding to the outlier detection analysis represented by step 262 of Fig. 2. Outlier detection generally is implemented to detect patterns in the subject power plant data that do not conform with pre-configured standards of operation. Outlier detection can be applied to data on the component level, unit level and/or fleet level. Anomalies or outliers detected in step 262 correspond to those detected patterns that are outside such pre-configured standards. In one example of outlier detection, such as depicted in Fig. 4, univariate statistical analysis is used to identify power plants that fall within preconfigured lag time performance expectations as well as those power plants that fall outside an acceptable window. Box plots may be useful for this type of outlier visualization. In another example of outlier detection, such as depicted in Fig. 5, multivariate statistical analysis is used to identify outliers. A variety of multivariate statistical analysis options may be employed in accordance with the disclosed technology, including the 75/25 rule, the three-sigma rule, or calculation of the Mahalanobis Distance. This latter option was used to generate the visualization of Fig. 5 by using the following formula,

$$D_{uc}^2(X_u) = (X_u - \mu_c)^T (\Sigma_c)^{-1} (X_u - \mu_c),$$

where $\Sigma$, is the covariance matrix, $X_u$ is the date of the $u^{th}$ row, and $\mu_c$ is the mean vector.

Referring now to Fig. 6, an exemplary visualization associated with clustering analysis step 264 is shown for a particular power plant unit. In such example, different instances of startup operations for a particular power plant are plotted according to the relationship between lead and lag gas turbines. Different groups of starts are clustered together for purposes of visualization and subsequent analysis. It should be appreciated by one of ordinary skill in the art that a variety of different criteria may be selected for clustering and a variety of particular clustering methods may be used in accordance with the disclosed technology, including but not limited to mixture models, k-medoid algorithms, hierarchical clustering or the like. In some embodiments, clustering results can be used to interpret the relationship of clusters to different units/ plants within a fleet by implementing correspondence analysis that maps particular plants to corresponding clusters. Furthermore, statistical models can be developed to understand differences in startup characteristics between different shifts (operator variation) and which gas turbine was the lead gas turbine in operation. These can be based, for example, on ANOVA-based comparisons of key startup statistics or a comparison of cluster compositions of different start up scenarios. Tables or other data summaries may provide a listing of the plants that are mapped to different clusters. Additional plots may be provided to show the parameter results for each plant grouped by cluster.

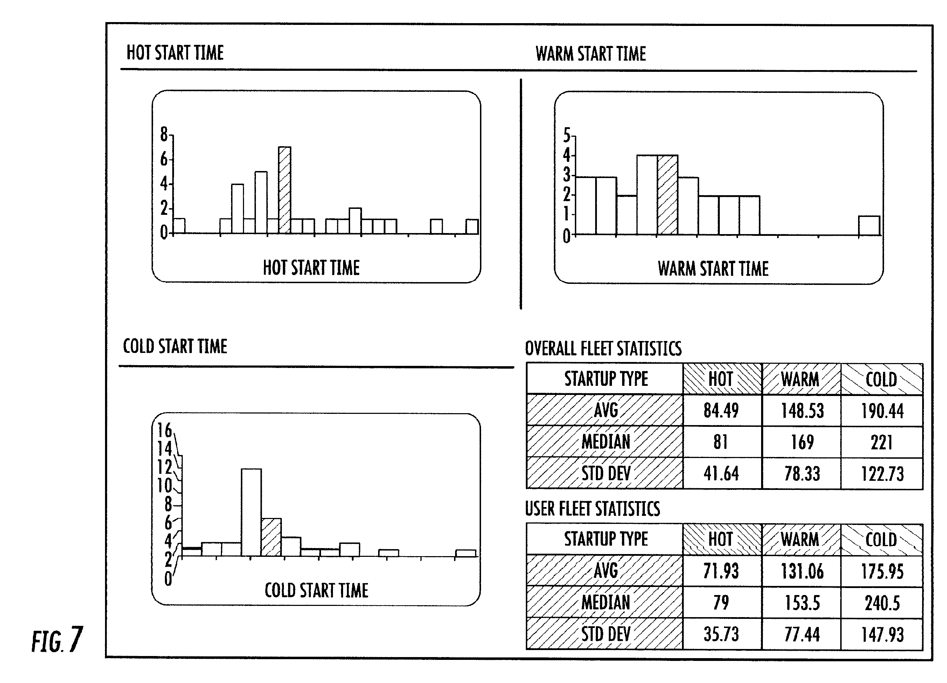

Referring now to Fig. 7, such illustration depicts an exemplary visualization identifying selected characteristics associated with different instances of a start operation within a power plant. For example, the operational characteristics calculated in steps 224, 234, 242 and/or other steps in the subject benchmarking analysis may be implemented to identify a start operation within a given power plant as one of a plurality of predetermined types, such as but not limited to a hot start, a cold start, and a warm start. A graphical illustration including a bar chart of start times may be provided for all power plant units, or all fleets (as shown), with a particular fleet associated with a user highlighted within the graphical plots. In addition, various statistical quantities associated with the collection of start instances identifying parameters such as the average, median and standard deviation for all fleets and then also for a particular user's fleet may also be provided.

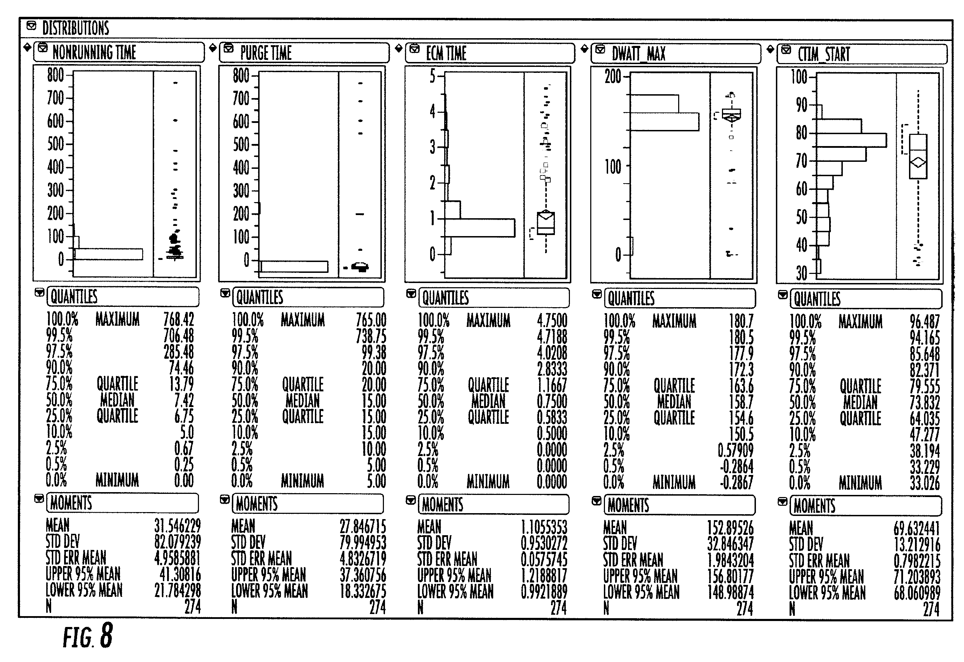

A still further example of a visualization that may be provided in accordance with the disclosed technology corresponds to the start cycle summary analysis of Fig. 8 in which data is analyzed to determine selected time periods within a power plant operation. The calculated time periods for a plurality of start instances or a plurality of different power plant components, units or fleets may then be provided as graphical output or numerical statistical output.

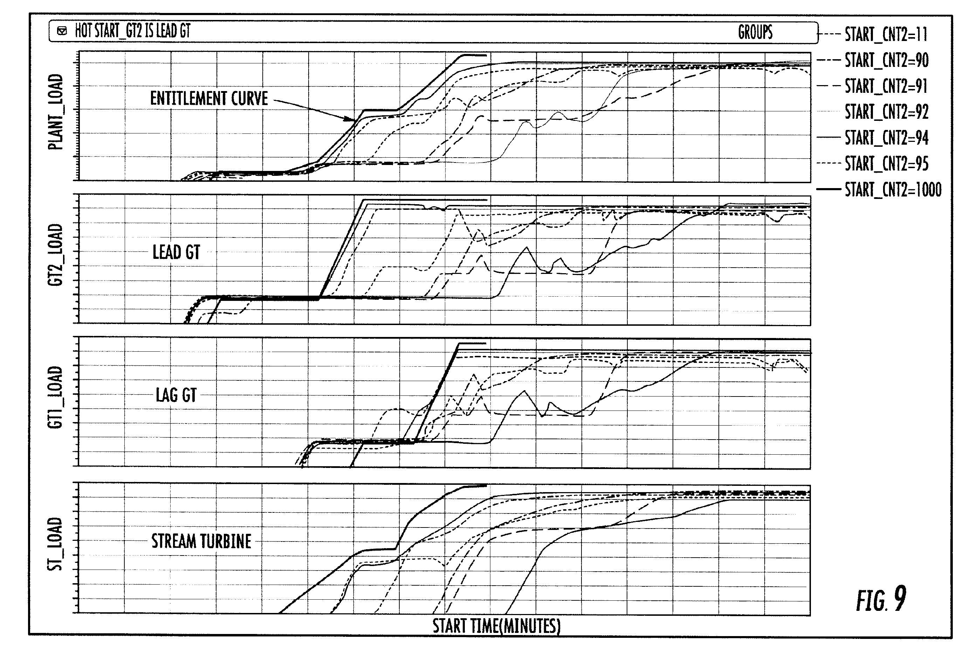

Fig. 9 provides another example of a visualization that may be implemented in accordance with the disclosed technology. In such example, output plots include a graphical comparison of the power load versus time for a particular plant as well as for the respective leading gas turbine, lagging gas turbine and steam turbine components of such power plant. Multiple instances of an operational start are tracked for each component and for the overall plant, and are compared with the entitlement curve that defmes ideal performance load for the plant and selected components thereof.

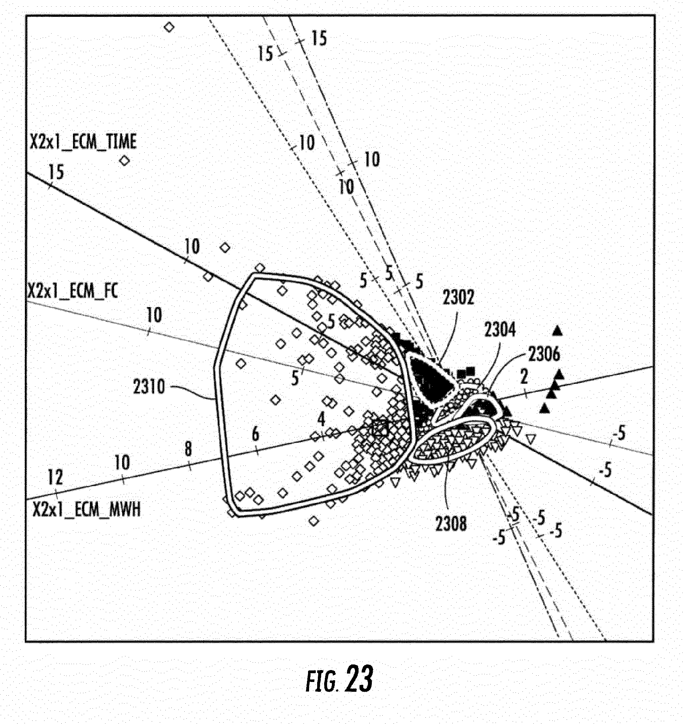

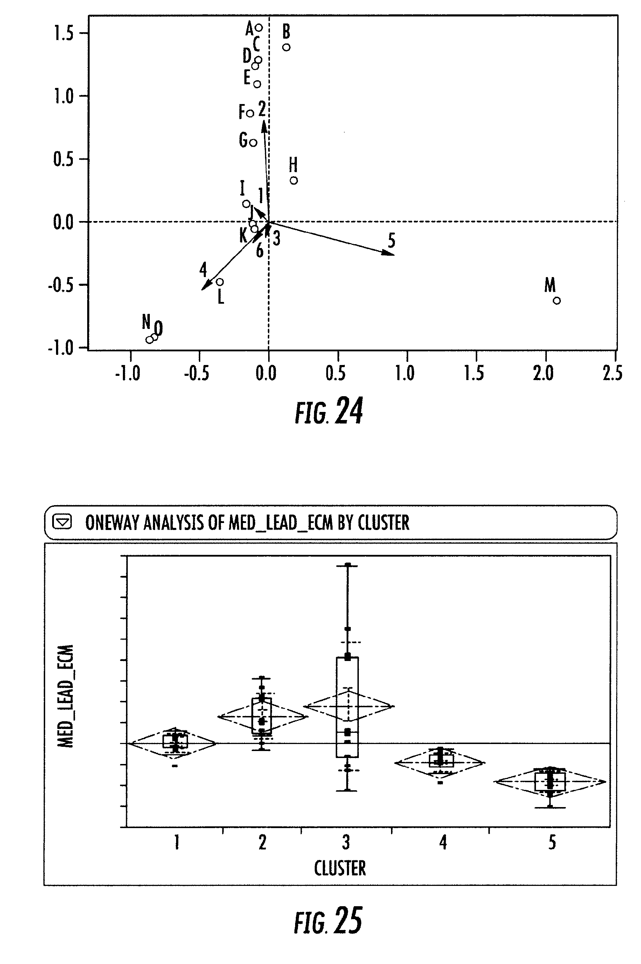

Figs. 23-25 illustrate additional features associated with clustering analysis and corresponding visualizations that may be provided to a user in accordance with the disclosed power plant analysis technology. For example, consider the output data summarized by the plant start graphs in Fig. 9, and that a user would like to benchmark a particular performance parameter (e.g., GT load for the lead GT at particular times within a startup operation) over a plurality of start instances in multiple power plant units. One exemplary visualization providing this information can be seen in Fig. 23 in which each data point represents a different instance of a power plant start for a plurality of power plant units. Once the data is collected for the plurality of startup instances, clustering analysis can be applied to group the startup instances into respective clusters. Five different clusters 2302, 2304, 2306, 2308 and 2310 are shown in the example of Fig. 23, although the number of clusters is not limited to five and can have a wide variety of ranges. Fig. 24 shows a related clustering visualization, where customer plants are segmented by site. Each circular data point in Fig. 24 represents a statistical quantity plotted for a respective customer site (sites A, B, C, etc.). Each arrow represents the average value for a different cluster in a collection of analyzed units, thus enabling a customer to determine how his site compares to the power plant startups or other monitored event at other sites and well as identified clusters of the same. Fig. 25 shows a still further variation of an exemplary clustering visualization, where the range of performance data for each cluster 1-5 is plotted in a box plot format so that a customer can understand various physical parameters for different clusters. Fig. 25 shows a lead gas turbine time parameter for each cluster and illustrates differences between different clusters visually and statistically. This clustering analysis can also be done for an individual site to understand patterns in each site startup to understand operator related differences and other variations. In some embodiments, clustering analysis can also be performed to understand migration of plant operational characteristics from one cluster to another cluster with respect to time. A shift of one plant's operational characteristic(s) from one cluster to another may represent changes in plant operational characteristics because of hardware and software changes, plant degradation, change in operational philosophy, etc. Plant operation can move from more preferred levels of operation to less preferred levels of operation or vice versa. Different preference levels for different performance clusters can be preconfigured by establishing various threshold levels for the monitored performance parameters. In some embodiments, when one or more plant operational characteristic(s) shifts to a less preferred level, an alarm may be triggered and provided as output to a user.

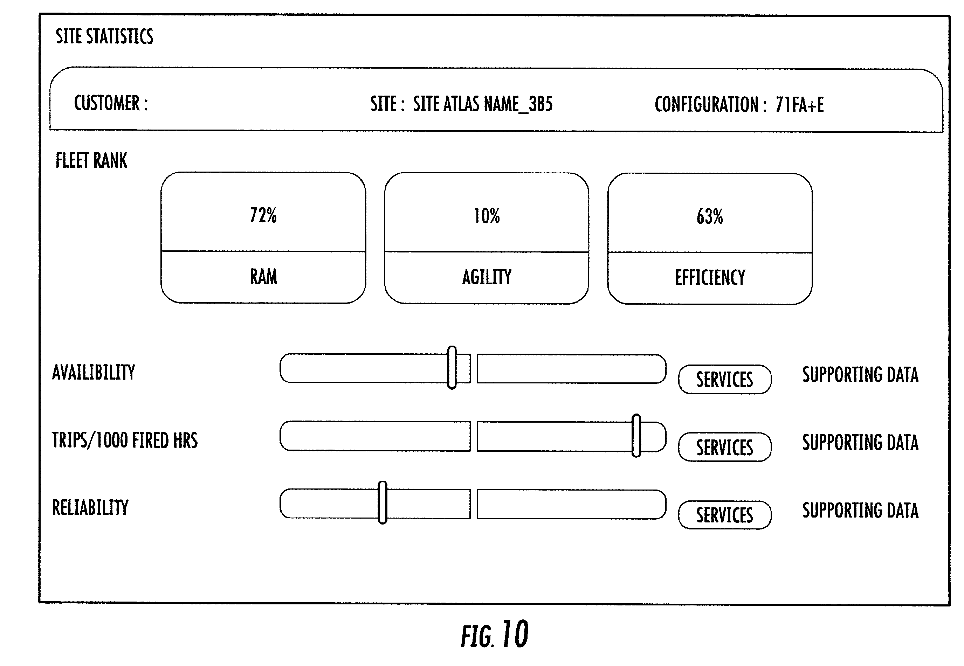

Referring now to Fig. 10, a still further example of a visualization that may be implemented in accordance with the subject fleet level benchmarking features involves a fleet level ranking whereby a user's particular fleet of power plants is compared to other fleets in order to determine a percentage-based or other numerically quantified ranking or comparison to other fleets. In the particular example shown in Fig. 10, a given fleet is indicated as ranking in the 72nd percentile among other fleets for memory utilization, in the 10th percentile for agility, and in the 63rd percentile for efficiency. Availability, number of trips per 1000 fired hours and reliability characteristics are also ranked for the particular fleet. It should be appreciated that the type of ranking provided in Fig. 10 can be provided for different characteristics on the fleet level or may alternatively be provided on the unit or component level instead of the fleet level.

In still further examples of the disclosed technology, user-specific visualizations can be generated such that the user sees all of his sites on a geographical map. For example, as shown in Fig. 11, exemplary visualization 1100 includes a geographic map including icons 1102 indicating various plant locations within a fleet. A user's specific location 1104 within the fleet may be shown with a unique icon, such as a different color symbol relative to others in a fleet. Geographic displays that focus on different levels, such as unit level, sub fleet level, fleet level or others may also be generated. Such a user-specific location overview as shown in Fig. 11 may also show the status of each site (running, not running, forced or planned outage, system disconnected, etc.). From the location overview, a user can choose to access additional details for any specific site by clicking on a corresponding icon representative of the desired site on the map.

In some examples, site selection can then initiate the display of a site summary screen to the user. Such screen may contain a variety of selected performance summaries for a site, for example all summaries related to key performance indicators (KPI), active alarms and current operational status of a user's plant(s). A user can also personalize his KPI summary by selecting or de-selecting various options. One example of several KPIs are plant start time, plant reliability, availability, hours, starts, trips, heat rate, power output, total generation, total emission etc. Additional monitoring and diagnostics can provide information on various abnormalities related to gas turbines, generators and other plant assets. Anomaly detection systems can be configured to activate alarms whenever some anomaly is diagnosed for user assets, e.g., GT combustion alarms, compressor alarms and the like. A site summary table can also show the user site ranking with respect to fleet for each of the score cards. Users can print summary reports or e-mail selected summary reports to any other person.

Based on user-specific access to the disclosed benchmarking application, users can also select an application and/or score card of interest by clicking into various buttons or links. Based upon the user's site configuration and region, fleet benchmarking calculations are performed and plots are created within the web-based portal. Later, users can select other configurations and/or geographical locations for fleet level calculations and segmentation. It may be useful to show a user's site with a different color in comparison to fleet data in fleet benchmarking charts/graphs. After seeing a fleet view, a user can click on the dot or bar on the chart (based upon the type of the chart) to drill down into his or her sub fleet or site charts and data. A user can also compare multiple sites or various units within the same site based upon his or her selection. Users can also calculate ranking of their sub fleet with respect to various score cards and KPIs.

Another particular example of a user-specific visualization set involves a performance scorecard. In a summary page, a user can be provided a high level summary related to performance KPI (heat rate, power output). When the user drills down into more details of performance, he may be shown a fleet level histogram of Corrected Heat Rate and Corrected Power Output. This histogram is for hardware configuration and geographical region of a recent time period for the user-selected site. However, the user can expand this fleet segmentation by including additional configurations and geographical locations. The user also can change time duration. Charts can also show user site rank with respect to fleet as well as various fleet and user site statistics (e.g. mean, median, standard deviation.) Detailed time series plots can be shown for a user's sites, as well as comparisons of multiple sites together. On this time series plot, a user can enter his own comments related to various site maintenance activities and events. Additional visual indicators may be provided to represent various events at the site, e.g., hot gas path inspection, major inspection, forced outage, offline water wash, etc. These events are populated for one event data base. These time series charts are important to understand the plant degradation profile of the site, since gas turbine performance can change due to compressor fouling, non-recoverable degradation or some maintenance action. A user can also look at all historical water wash events and can also run a water wash optimizer from the same application.

Another example of specific analysis and visualization that may be provided as part of the disclosed technology concerns analysis related to plant reliability. From a general visualization standpoint, the subject application may generate for a user a visualization showing all the user's sites on a fleet level reliability histogram. If the user clicks on his or her site bar, it will show a further breakdown of all unreliability causes and also top causes of trips. A user can also see the power plant trip rate on a yearly or monthly basis.

In additional examples of plant reliability analysis, the subject application may be configured to generate a startup status indicator. For example, a power plant and/or selected components of a power plant (e.g., gas turbines and steam turbines therein) can be assigned a categorical identifier that corresponds to a particular status definition. For example, a plant status of "0" could mean that none of the plant's gas turbines had a successful start and therefore the plant had a failed start. A plant status of "1" could mean that oen of the plant's gas turbines had a successful start and thus the power plant had a successful start. In one example of providing gas turbine status ratings on the component level, a "0" status means that the unit is not started, a "1" status indicates a purge issue, a "2" status indicates a loss of flame issue, a "3" status indicates an issue after flame but before reaching FSNL, a "4" status indicates an issue after FSNL and before reaching ECM, a "6" status indicates a waterwash issue, and a "10" status could indicate a successful start. Similar rankings could be provided for steam turbines or other components within a power plant. The actual status identifiers and corresponding definitions can be completely customized depending on user preferences. Additional specific calculations that could be generated in accordance with the disclosed startup reliability analysis may include one or more of a sum of the different startup status rankings described above, the total number of starts, the total number of start attempts, the total number of start attempts without purge issues, the total number of failed starts, the total number of failed starts without purge issues, the startup reliability percentage, startup reliability percentage, startup reliability percentage without purge issues, purge issue percentage, loss of flame issue percentage, issue after flame and before reaching FSNL percentage, issue after FSNL and before reaching ECM percentage, waterwash counts, and GT failed to break away count.

Referring now to Fig. 12, an exemplary system implementation 1200 illustrates specific software modules that may be provided as part of the disclosed power plant analysis application, particularly in accordance with the scorecard and analytics components of the disclosed technology. In such example, different modules are provided as follows: a fleet scorecard module 1202, an average hours, starts and trips module 1204, a load profile module 1206, a starts and trips per 1000 hours fired module 1208, a start time statistics module 1210, a startup reliability module 1212, a reliability and availability (RAM) module 1214, a gas turbine performance module 1216 and an offline waterwash optimizer module 1218. Additional details regarding each of these exemplary modules will now be presented. It should be appreciated that different embodiments of the disclosed technology may selectively include any one or more of these modules or variations of these modules in a power plant analysis application.

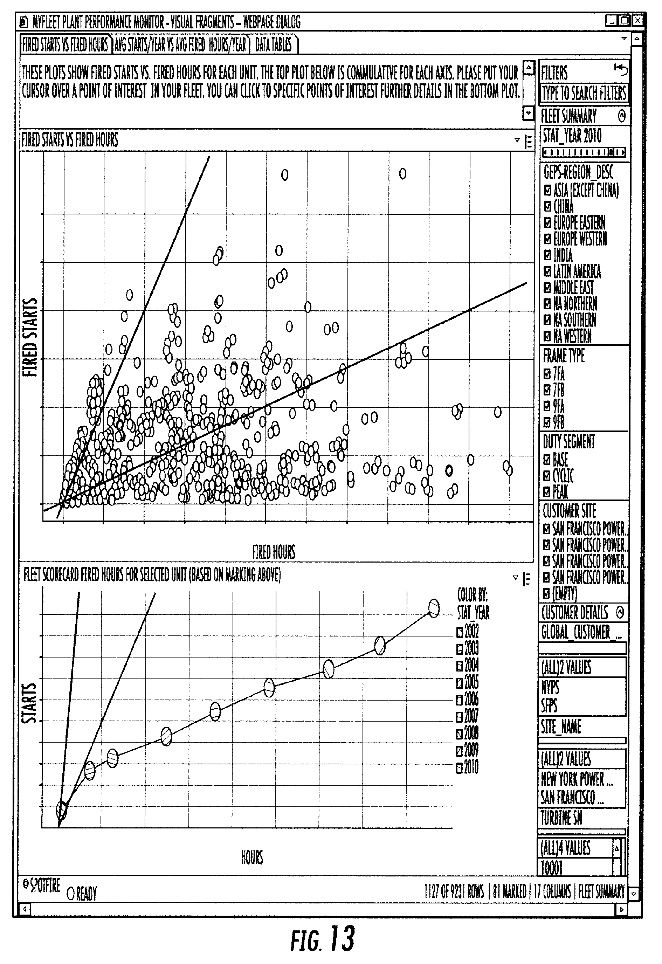

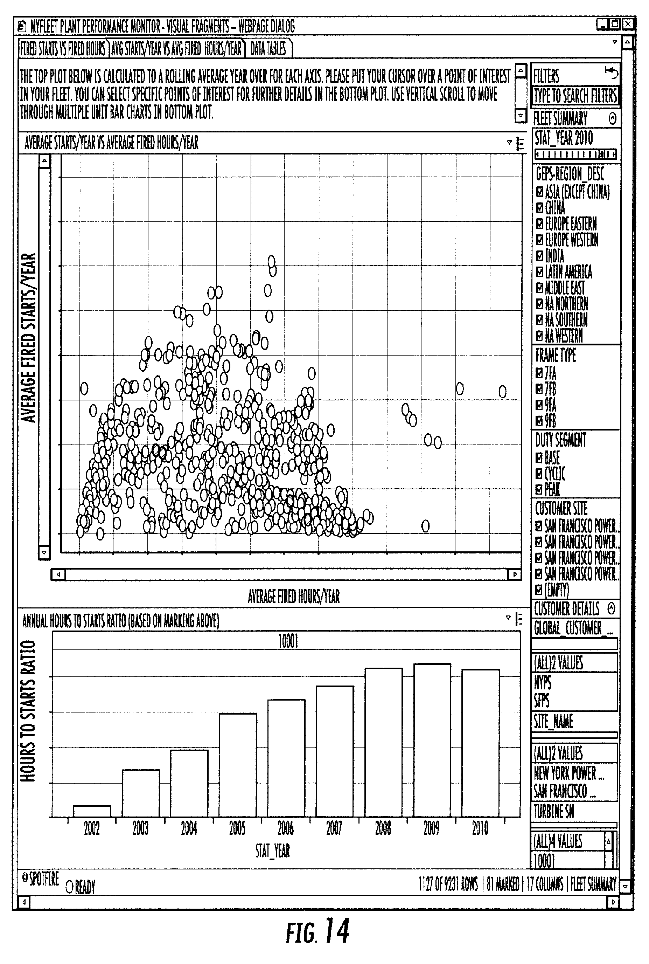

Referring first to the fleet scorecard module 1202, a fleet score card may be generated that benchmarks user operating hours, starts and trips with respect to a gas turbine fleet. Such module may also provide operating profiles of particular time periods or cycles (e.g., startups) for all gas turbine units. A user can also compare one gas turbine unit to other units from his or her site. A user can also filter and segment the units based upon geographical regions, duty cycle, frame type etc. as shown with the filters for user specified time duration as shown in Fig. 13. Two lines 1302 on the chart of Fig. 13 are segmenting base load, cyclic load and peak load units. A user can drill down more about the site operating profile by clicking "average hours per year and average starts per year" tab 1304. This tab provides more information about yearly hours to start ratio, as shown in Fig. 14. The higher this ratio, the more and more a unit is running in base load profile. Users can select multiple units from their site for comparison purpose. A user can also see the data and download the data by going into "Data Table" tab 1304. Different parameters that may be calculated in accordance with the fleet scorecard module 1202 include selected parameters from the following list:

Fired Hours: Total fired hours counter value at user selected year. It is the maximum value of the counter in a selected year.

Fired Starts: Total fired start counter value at user selected year. It is maximum value of the counter in a selected year.

Average Hours per year: Average operating hours of gas turbine in user selected duration

Average starts per year: Average number of gas turbine fired starts in user selected duration

Hours to starts ratio: Fired Hour counter/Fired Start counter at user defmed year or time. Lower ratio indicates cyclic profile of the unit. Peak Load Unit: Hours/start <=10, Cyclic Unit: Hours/Starts<=50, Base loaded unit: Hours/Starts>50.

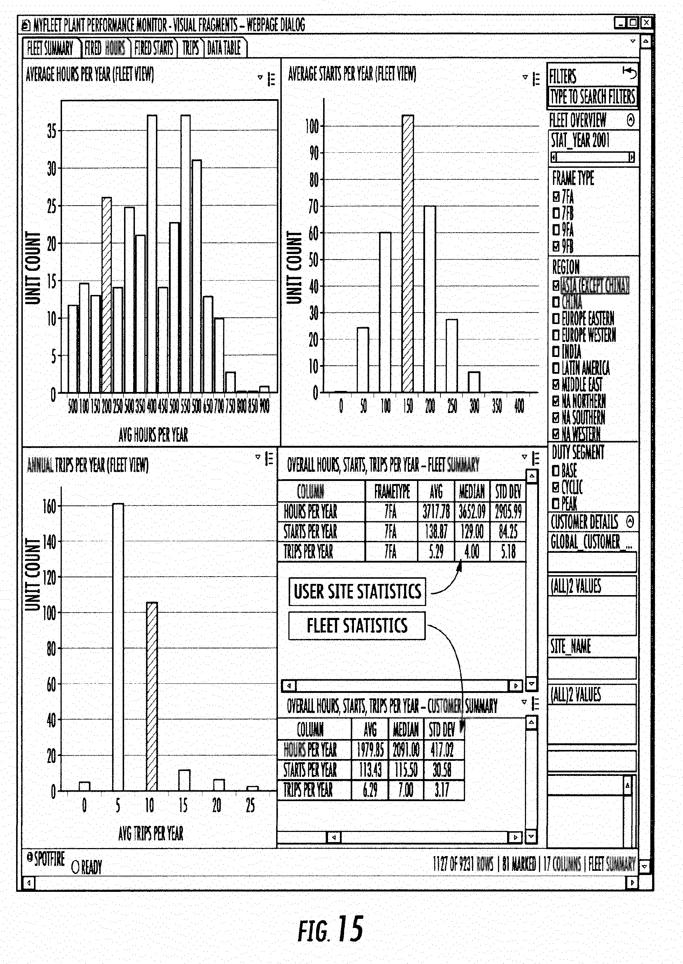

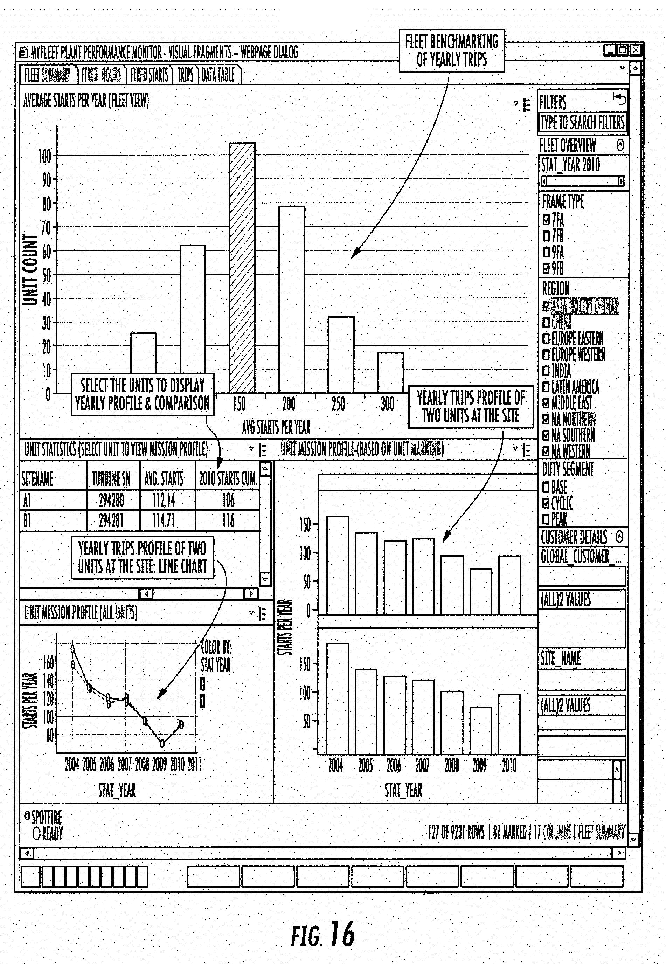

Referring now to the Average Hours, Starts & Trips Module 1204, such module provides the average hours, start and trip profile of a gas turbine fleet and site specific units. A user can do segmentation and filtering as previously discussed. Fig. 15 provides an example of fleet distribution and site position with respect to a fleet for average running hours, starts and trips, where the Y-axis in Fig. 15 chart indicates frequency (i.e., number of units). The first table in the top portion of Fig. 15 provides user site statistics of average hours, start and trips and second table is related to fleet statistics. Additional display tabs may be available within module 1204 to provide information related to fired hours, fired start and trips tab providing site historical trends, unit level comparison and fleet level comparison. Fig. 16 shows one example of data illustrated within an average trip tab. Users can do benchmarking of their sites with respect to a fleet and can compare selected units. Users can also view and download data related to their sites from data tab.

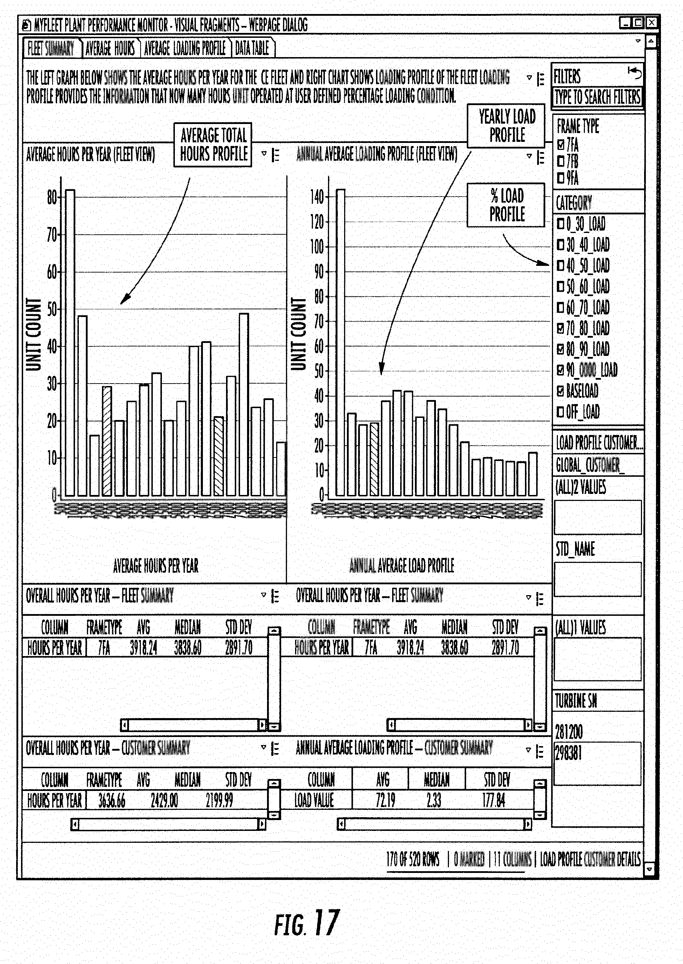

Referring now to the load profile module 1206, such exemplary module provides benchmarking and site specific information of hours of operation at various percentages loading condition. This module also summarizes non running hours. Percentage load is calculated as a fraction of rated load corrected to ISO reference conditions. These corrections are applied to account for ambient variations. Complete load range is divided into bins of 10% increment. A user can select a percentage (%) load bin of interest to calculate fleet level and unit level statistics. For example, as shown in Fig. 17, a user has selected 70% to base load bins to calculate fleet and site level statistics. Like other charts, a user can also segment the fleet by applying frame type, year duration, duty type, geographical region etc. filtering. An average hours tab has similar monthly and annual profiles of user selected units. Additional visualizations may provide load profile tab details, including such exemplary details as the monthly or annual load profile comparison of user selected units and the fleet wide percentage load profile. Monthly loading profiles are calculated by summing the number of cumulative hours at various load bins on a monthly basis.

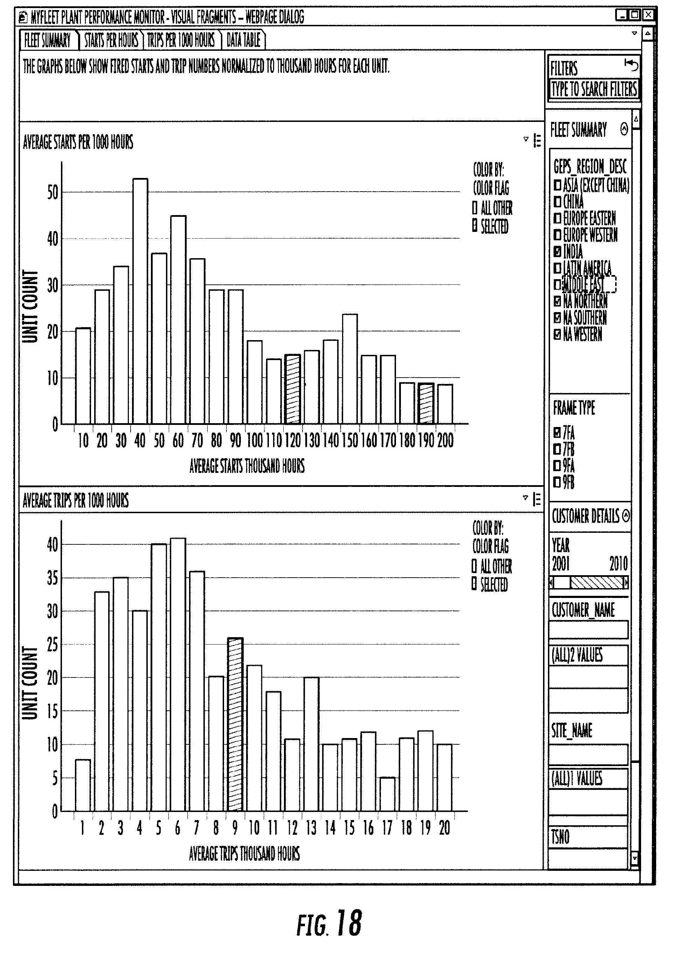

Referring now to the Starts & Trips Per 1000 Fired Hours module 1208, such module is similar to fleet scorecard module 1201, but here starts and trips are normalized to 1000 fired hours to account for operating hours variation in the fleet. More particularly, the number of starts per 1000 hours is equal to the total number of fired starts counter times 1000 divided by the total fired hours counter. The number of trips per 1000 hours is equal to the total trips counter times 1000 divided by the total fired hours counter. Fig. 18 shows an example of a fleet level view of starts and trips per 1000 hour profile. Additional examples may provide unit comparison and annual profile of fired starts or other information.

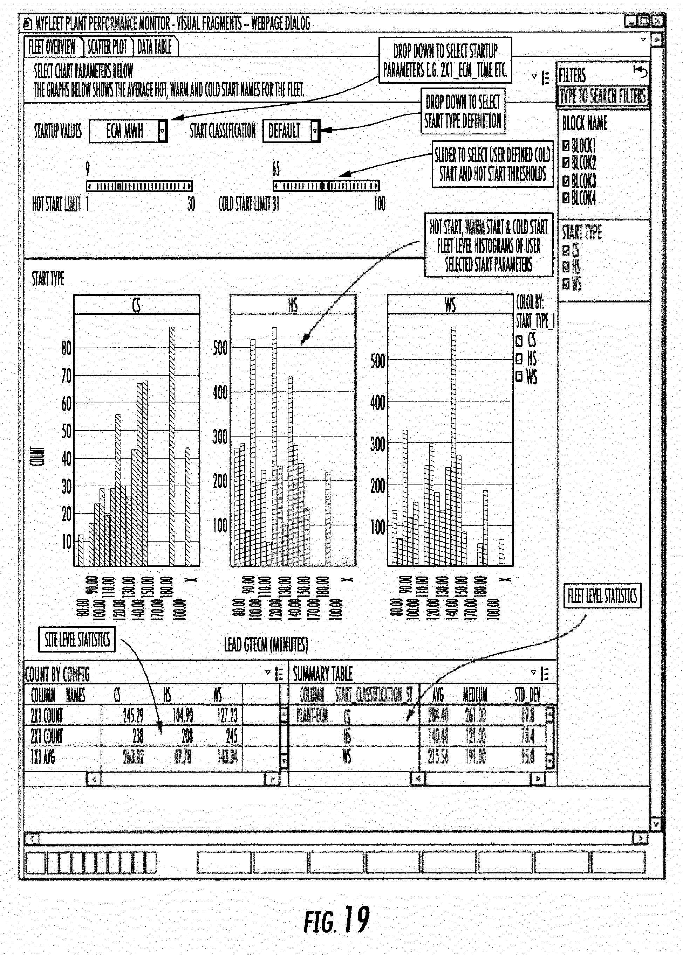

Referring now to the Start Time Statistics module 1210, such module provides fleet and unit level statistics of start time. Every utility wants to maximize their revenue buy optimizing start time, startup fuel consumption and startup MW generation. This module calculates site start time statistics, e.g. start time to reach emission compliance mode (ECM), startup fuel consumption (MMBTU), and start up MWH generation etc. for 2x1, 1x1 and 1x0 starts. These starts are also segmented based upon Hot, Warm and Cold starts. Fig. 19 provides a snapshot of startup statistics. Definitions related to various start time calculations are provided below. Startup parameters can be selected through a dropdown menu or other selectable user interface feature.

GT Start Definition (GT_Start): L1S=1 OR L1X=1
Lead GT Start: First gas turbine start
Lag GT Start: Second GT start time from lead GT start
ST Start Definition (ST_Start): Time to reach ST start condition (L4 = 1 and TNH > 0.3 %) from lead GT Start time.

2x1 Start: Both gas turbines and steam turbine start (depending on the time difference between turbine starts, 2x1 starts can be further classified as hot, warm or cold starts.

1x1 Start: One GT and steam turbine start
1x0 Start: GT only start when another GT and steam turbine already running

To remove the dispatch effect from real startup entitlement, preconfigured conditions may be set to define different types of start classifications, startup time and power generation definitions, fuel consumption definitions, etc. Additional plots may provided, such as but not limited to scatter plots providing a correlation between various startup parameters for user selected units and parameters. Users can also drill down into individual starts for their sites. Startup calculations are done on daily basis and startup database is updated on daily basis.

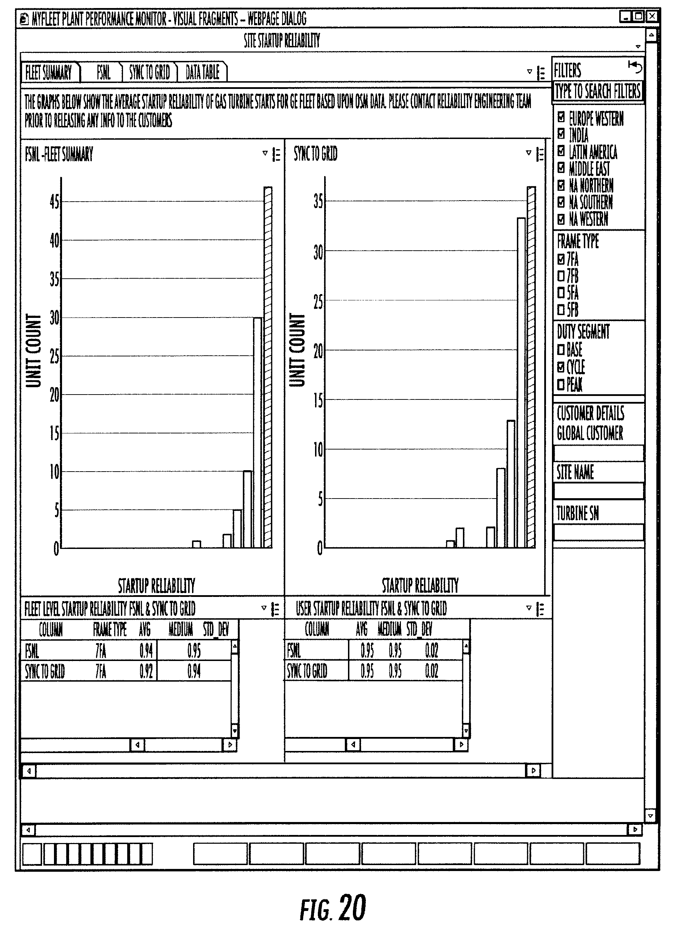

Referring now to startup reliability module 1212, such module generates a different kind of score card in accordance with the disclosed technology, namely a startup reliability scorecard. In such scorecard, benchmarking statistics are provided in accordance with detection of the following events during a gas turbine startup sequence: customer attempts to start the unit, failure to ready to start, pre ignition failure, delay in pre-ignition, post ignition failure, delay in post ignition, failure to achieve FSNL or Post acceleration, delay in FSNL, synchronization failure, successful start, etc. Specific parameters that may be selectively provided within a startup reliability scorecard include: Startup Reliability FSNL (i.e., successful FSNL or post acceleration starts events per total attempted starts) and Startup Reliability Sync to Grid (i.e., the total number of successful grid sync starts per total attempted starts). Fig. 20 provides fleet level benchmarking of startup reliability for these two above parameters. FSNL and Sync to Grid tabs may be provided to display more details and breakup if successful and startup failure events for respective metrics.

Referring now to the Reliability and Availability Module (RAM) 1214, such RAM module provides benchmarking related to reliability and availability. Simple cycle reliability as well as plant level reliability may be calculated. Reliability and availability calculations can be based upon various events and outage information collected from internal and external sources. In one embodiment, reliability calculations include the percentage of time when equipment did not have a failure, an unplanned outage factor definition including all except for planned outages, and a Forced Outage Factor definition including only forced outages such as trips, failed starts, and forced unavailability from a non-operational state. In one embodiment, availability calculations include the percentage of time when the equipment either is or could have been operating. An availability metric may account for all outage types, including unplanned and planned outages. In some examples, the reporting period may be particularly selected, for example a data range of reporting over a twelve (12) month period aged three (3) months from the report date.

Referring now to gas turbine performance statistics module 1216, such module calculates gas turbine performance (corrected heat rate, corrected power, capacity factor) statistics based on measurements obtained at base load and steady state that are subsequently corrected to particular reference conditions. Performance parameters (e.g. heat rate, gross power, etc.) are corrected to particular reference conditions for more meaningful statistical comparison. Reference conditions may include predefined values for one or more of the ambient temperature, barometric pressure, speed ratio, inlet pressure drop, exhaust pressure drop, site specific full load IGV angle, power factor, status of atomizing air, status of methane fuel (CH4), status of inlet bleed heat, exhaust pressure measurement method, enablement status of unit specific exhaust temperature control curve, inlet cooling status, water/steam injection status. Like other modules, module 1216 can provide yearly heat rate profile and unit level comparisons.

Referring now to the offline waterwash optimizer module 1218, such module provides the capability to find optimal offline water wash intervals or optimized intervals for other turbine maintenance tasks. The particular implementation of water washing is advantageous for reversing the fouling of a gas turbine compressor due to impurities in the air. Fouling of a compressor causes loss in compressor performance. However, such compressor performance loss due to this reason is a recoverable loss that can be recovered through offline or online washing of the compressor. An offline water wash is very effective in removing compressor fouling, but it causes downtime of the compressor. Downtime causes revenue loss due to loss in availability of a gas turbine. As such, offline water wash should be performed at optimal time intervals, where financial loss due to lost power and heat rate is more than water wash cost.

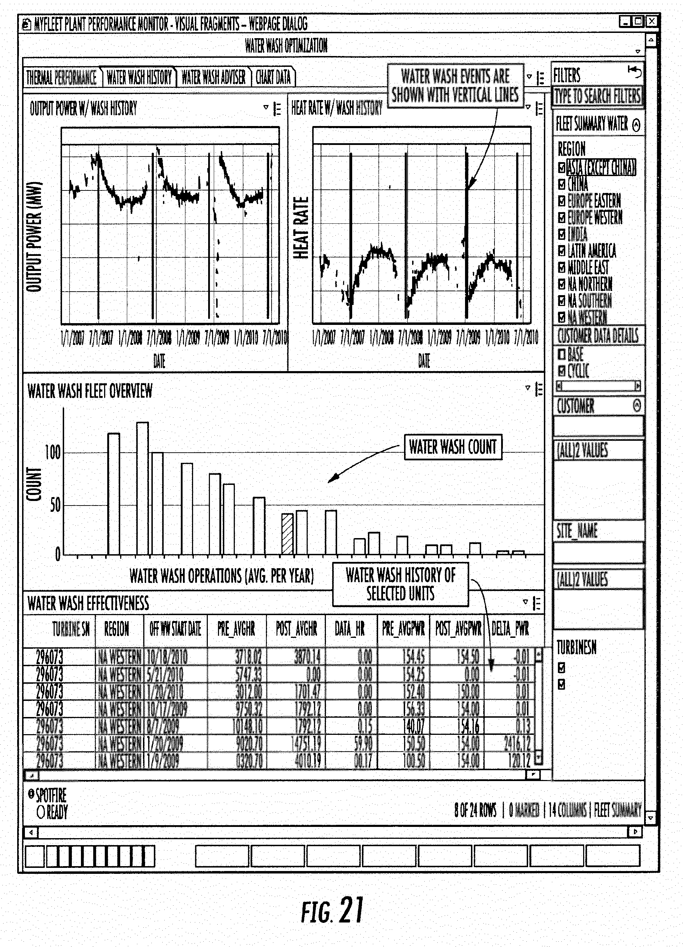

Water wash cost optimization implemented in module 1218 thus may include calculations of lost revenue due to GT downtime, startup cost, materials costs for detergent, water and the like, and man power cost. Calculated parameters may also include a waterwash count (i.e., the number of offline water wash events for a user defined time duration) as well as a degradation cost (i.e., loss of performance between two time periods in terms of lost power, heat rate, etc.) This module 1218 can also provide a time series chart (base load and steady state filtered daily average value) of corrected heat rate and corrected power output. Module 1218 also can provide various historical water wash event dates, pre and post water wash corrected heat rate, corrected power, delta heat rate, delta power values for historical water wash events. A user needs to provide electricity price, fuel price, water wash cost and optimization criteria to calculate optimal wash interval. Optimizer recommendations may be provided in terms of calendar days and fired hours. An exemplary visualization of waterwash calculations is shown in Fig. 21. The upper portion of the graphical interface of Fig. 21 shows time series of heat rate and power output with water wash events overlayed as vertical lines. Information is also provided to identify water wash event dates and Post/Pre power, heat rate and recovery factors. Wash time recommendations also may be provided in terms of calendar days and fired hours.

In any of the above-referenced modules of Fig. 12 or others provided in accordance with the disclosed technology, it should be appreciated that a variety of data analysis techniques may be selectively applied. For example, a filtering feature may be provided for filtering data by year or month or other period of time, by geographical locations based upon various regions, by hardware configuration, by frame & model type, by duty type, by customer site and unit selection and segmentation. In other examples, bencmarking features may be applied for user site and fleet statistics (e.g., mean, median, standard deviation, counts etc. for various performance parameters). If a user has many sites that user is responsible for, then benchmarking can be done for customer specific sites and user defined segmentation. Features related to analyzing multiple units or site comparison can be provided whereby a user can also compare his units and sites for various KPIs and operating parameters. Site-specific drill down features may be used to provide more than just fleet level views and benchmarking capability, but also drilled down operational history of the user's sites and units. Data download features can be used by a user to download and view tables for the user's particular sites, but not for other's sites. Chart export features can be used to export visual charts to generate reports. Fleet ranking features are provided whereby a percentile ranking within a fleet is calculated and shown for all KPIs. Brushing capability features also may be provided such that a user selects some portion of the data in the chart causing that selection to be passed on to all the charts in a respective module.

Referring now to Fig. 22, another example is presented of steps that may be implemented in an embodiment of the disclosed technology that is particularly implemented for analyzing plant startups, one of the more important operations within a power plant environment. Some of the steps illustrated in Fig. 22 are the same or similar to steps previously described herein, especially with reference to Fig. 2. Additional detailed discussion of such previously described features will not be repeated herein, but instead can be appreciated from the previous discussion. Many of the steps illustrated in Fig. 22 can be implemented for a variety of specific types of startup analysis. In general, the exemplary steps shown in Fig. 22 concern steps related to general plant startup cycle and reliability analysis

Referring still to Fig. 22, a first exemplary step 2202 involves reading plant configuration information in step 2202 and reading plant data in step 2204, which steps are collectively similar to step 212 in Fig. 2. Missing data tags are handled in step 2206, similar to step 214 of Fig. 2. Because startup analysis is conducted in Fig. 22 for a particular power plant, data validation is conducted for gas turbine (GT) components in step 2208 and for steam turbine (ST) components in step 2210, similar to data validation step 218 of Fig. 2.

Referring still to Fig. 22, steps 2210-2232, respectively, include various steps related to plant startup analysis. In step 2212, a summary scorecard is generated for the gas turbine (GT) components within a particular power plant. The GT Scorecard can include any number of selected parameter calculations related to the performance and timing segmentation of operation during startup of the gas turbine components. In step 2214, a summary scorecard is generated for the steam turbine (ST) components, including any number of selected parameter calculations related to the performance and timing segmentation of operation during startup of the steam turbine components. Step 2216 involves getting gas turbine (GT) startup cycle information (i.e., selecting parameter data during determined start and stop times defining an instance of a GT startup). Selected milestones or key events within the start (e.g., flame detection, reaching FSNL, etc.) and data associated with those milestones can also be identified. In some instances, it may be desirable to further filter component data, as in steps 2220 and 2222 to identify selected data that might be mistakenly considered a startup event. For example, in step 2220, waterwash events within a gas turbine or other maintenance related events are identified and extracted or separately categorized from other startup data. In step 2222, events where a gas turbine failed to breakaway are also identified and characterized accordingly.

Based on the data gathered and filtered in steps 2216-2222, additional analysis is then conducted in steps 2224-2232. For example, step 2224 involves finding the lead and/or lag GT components and specific instances of plant starts either with and/or without additional ST data. Plant startup cycle data is then computed in step 2228 such that a summary scorecard for GT starts can be generated in step 2230 and a summary scorecard for plant starts can be generated in step 2232. Based on determined levels of generator output power (Dwatt) for the various identified startups, startups can be categorized or binned into different preconfigured levels (e.g., hot, warm, cold starts or other subcategories thereof).

Referring still to Fig. 22, additional steps 2234-2242 may concern specific steps taken to implement plant reliability anlaysis. For example, step 2234 concerns identifying a startup status indicator for each GT component, step 2236 concerns generating a startup status indicator for each ST component, and step 2238 concerns generating a startup status indicator for collective power plant unit. Examples of startup status indicators (0, 1, 2, 3, etc. corresponding to different definitions) were previously discussed. In step 2240, statistics of different startup status groups are calculated, and an ultimate percentage rate of startup reliability is calculated in step 2242. Additional steps as already discussed above, including clustering, additional statistical analysis, etc. may be implemented in step 2244.

Advantages afforded by the above improvements and other disclosed features of the present technology include abilities to: identify opportunities to improve startup time and provide recommendations, upgrade current power plant analysis capabilities, identify startup reliability issues, provide for automated ranking of plants/units/components based on scorecards for startup, shutdown or other type of power plant operation, provide value based services for a total plant environment, implement fleet level comparison of starts enabling better strategy for customer service management, utilize fleet level information and recommendation to help in improving design, provide anomaly detection to reduce forced outages and downtime by tracking each start and shutdown proactively, quantify startup and shutdown time variability for unit or fleet level startups and identify opportunities to improve plant startup time and shutdown profile through better operation, maintenance and control software or hardware upgrades.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

Various aspects and embodiments of the present invention are defined by the following numbered clauses:

1. The method of clause 1, further comprising electronically classifying the starts associated with selected power plant units as one of a preconfigured list of start types, said preconfigured start types comprising at least one level of hot start, at least one level of cold start, and at least one level of warm start.

2. The method of clause 1, wherein said at least one type of operation within a power plant comprises one or more of starts, shutdowns, trips, load rejections, grid disturbances, fuel transfers, combustion mode transfers, islanded load steps, periods suitable for steady-state performance evaluation, loading, unloading, and transients affecting component life.

3. The method of clause 1, further comprising electronically generating a map-based visualization of a collection of multiple power plant units, whereby each power plant unit is represented by a respective graphical icon on the map-based visualization, and whereby user selection of a particular graphical icon initiates the display of additional summary information for the corresponding particular power plant.

4. The method of clause 1, further comprising electronically generating a customer-specific summary of key performance indicators, active alarms and current operational status for each of a customer's power plant units and providing the customer-specific summary as output to a user.

5. The method of clause 1, further comprising electronically calculating an optimized time for performing a water wash event within selected power plant components and providing the calculated optimized time as output to a user.

## Claims

1. A method of implementing benchmarking analysis for power plant operations, comprising:

electronically accessing power plant operational data (166) including one or more monitored parameters (202) defming at least one type of operation within a power plant (100);
electronically analyzing data from one or more power plant components within one or more different power plant units in one or more collections of power plants to identify cycles and key events on one or more of a component level (220), a unit level (232) and a collective level of multiple power plant units (240);

generating at least one scorecard summary (252) of calculated power plant operational characteristics on selected levels of operation comprising one or more of a component level, unit level and collective level of multiple power plant units; and

providing said at least one scorecard summary (252) as electronic output to a user.

2. The method of claim 1, wherein said at least one scorecard summary (252) comprises information comparing at least one given power plant component, unit or collection of power plant units to other plant components, units or collections of power plant units or to an entitlement curve defining ideal performance levels for the at least one given power plant component, unit or fleet.

3. The method of claim 1 or 2, wherein said at least one scorecard summary (252) comprises power plant operational characteristics for a particular power plant unit as well as for selected turbine (102) components and other components within the particular power plant unit.

4. The method of claim 1, 2 or 3 wherein said at least one scorecard summary (252) comprises operational characteristics on a collective level of multiple power plants (100), wherein the collective level of multiple power plants is defined by one or more of a fleet level, sub fleet level, customer level and site level.

5. The method of any of claims 1 to 4, wherein said at least one scorecard summary (252) comprises a plurality of time values characterizing the duration of time that respective power plant components and/or units spend in a given segment of operation as defmed by identified key events within the operation (276).

6. The method of any of claims 1 to 5, further comprising a step of applying statistical analysis (260) to the calculated power plant operational characteristics for multiple power plant components, units or collections of power plants in order to detect outliers (262) whose data patterns fall outside of at least one pre-configured standard, and further providing selected results of the outlier detection as electronic output to a user.

7. The method of any of claims 1 to 6, further comprising a step of electronically clustering (264) power plant components, units or collections of multiple power plant units into respective groups, each group having one or more similar power plant operational characteristics, and providing selected results of the clustering analysis as electronic output to a user.

8. The method of any of claims 1 to 7, further comprising a step before said step of electronically analyzing data of electronically identifying missing data (214) within a power plant operation and buffering the missing data (216).

9. The method of any preceding claim, further comprising electronically segmenting (276) power plant operations having similar operational characteristics on the unit level and collective level of multiple power plant units, and providing selected results of the segmenting step as electronic output to a user.

10. The method of any preceding claim, further comprising electronically identifying failed starts for selected power plant units, calculating startup reliability of selected plants, and providing selected of the identified failed starts and the calculated startup reliability as electronic output to a user.

11. The method of any preceding claim, further comprising electronically generating an alarm (268) when non-optimal or anomalous behavior is detected within the analyzed power plants.

12. The method of any preceding claim, further comprising electronically identifying lag and lead gas turbines (236) and providing an indication of the identified turbines as electronic output to a user.

13. A power plant analysis and display system, comprising:

at least one processing device (186,196);
at least one memory (184,194) comprising computer-readable instructions for execution by said at least one processing device (184, 194), wherein said at least one processing device is configured to electronically access power plant operational data (166) including one or more monitored parameters (202) defining at least one type of operation within a power plant, to electronically analyze data from one or more power plant components within one or more different power plant units in one or more collections of multiple power plants to identify cycles and key events on one or more of a component level (220), a unit level (230) and a collective level (240), and to generate at least one scorecard summary (252) of calculated power plant operational characteristics on selected levels of operation comprising one or more of a component level, unit level and collective level of multiple power plant units; and
at least one output device (188,198) for providing said at least one scorecard summary as electronic output to a user.

**14.** The system of claim 13, wherein said power plant analysis and display system is accessible to a user via a web-based portal accessed via one or more wired or wireless networks (170).

**15.** The system of claim 14, wherein a user gains access to the web-based portal using a unique customer identifier such that data analysis conducted within the power plant analysis and display system is specific to the components, units and collections of power plants matched to an identified customer.

*FIG. 1*

FIG. 2

**POWER PLANT DATA** ⌐166

202 — PLANT PARAMETERS

204 — PLANT CONFIGURATION

206 — USER/DESIGN INFORMATION

200

⌐168

**DATA GATHERING AND FORMATTING** ⌐210

READ PLANT CONFIGURATION FILE AND PLANT DATA — 212

HANDLE MISSING DATA TAGS — 214

ADD DATA BUFFER — 216

IMPLEMENT DATA VALIDATION — 218

**COMPONENT LEVEL ANALYSIS** — 220, 222

ANALYZE DATA FROM INDIVIDUAL COMPONENTS (E.G., GT, ST, ETC.) TO IDENTIFY OPERATIONS/CYCLES AND KEY EVENTS ON COMPONENT LEVEL

CALCULATE OPERATIONAL CHARACTERISTICS FOR IDENTIFIED CYCLES FOR SELECTED COMPONENTS — 224

**FLEET LEVEL ANALYSIS** — 240, 242

CALCULATE OPERATIONAL EVENTS AND/OR CHARACTERISTICS ON FLEET OVER MULTIPLE POWER BLOCKS/UNITS IN A GIVEN GEOGRAPHICAL AREA

**UNIT/BLOCK LEVEL ANALYSIS** — 230, 232

ANALYZE DATA FROM MULTIPLE COMPONENTS IN A POWER UNIT/BLOCK TO IDENTIFY OPERATIONS/CYCLES AND KEY EVENTS ON A UNIT/BLOCK LEVEL

CALCULATE OPERATIONAL CHARACTERISTICS FOR IDENTIFIED CYCLES FOR SELECTED UNITS/BLOCKS — 234

IDENTIFY LAG/LEAD COMPONENTS WITHIN UNIT/BLOCK — 236

HANDLE INCOMPLETE CYCLE DATA WITH BUFFERS — 238

**SCORECARD GENERATION** — 250, 252

GENERATE ONE OR MORE SCORECARD SUMMARIES ON SELECTED LEVELS OF OPERATION - COMPONENT LEVEL, UNIT/BLOCK LEVEL AND/OR FLEET LEVEL

**STATISTICAL ANALYSIS** — 260, 262

OUTLIER DETECTION

EMPIRICAL DISTRIBUTION OF SELECTED SCORECARDS — 263

CLUSTERING ANALYSIS — 264

CYCLE RELIABILITY CALCULATION — 266

ALARM GENERATION — 268

**REPORTING AND VISUALIZATION** — 270, 272

FLEET LEVEL CYCLE BENCHMARKING

APPLY EXPERT RULES TO IDENTIFY CAUSES OF CYCLE DELAYS OR OTHER PERFORMANCE ISSUES — 274

UNITS LEVEL / FLEET LEVEL SEGMENTATION — 276

GENERATE VARIOUS TYPES OF PLOTS FOR OUTPUT — 278

| BLOCK_NAME | DATE | START_CLASSIFICATION | PLANT_ECM | PLANT_BL | 1X1_ECM | 1X1_BL | GT1_START | GT1_FSNL | GT1_BREAKER | GT1_ECM | GT1_BL | GT2_START | GT2_FSNL | GT2_BREAKER | GT2_ECM | GT2_BL | ST1_START | ST1_FSNL | ST1_BREAKER | ST1_FFM | ST1_IPC | ST1_BL | ST_BOWL METAL TEMP | ST_1ST STAGE METAL TEMP |
|---|---|---|---|---|---|---|---|---|---|---|---|---|---|---|---|---|---|---|---|---|---|---|---|---|
| PLANT A | 2009/12/08 06:06 | HS | | | 55 | 60 | 0 | | | | | 0 | 26 | 26 | 54 | 60 | 40 | 53 | 54 | 55 | 57 | | 983 | 938 |
| PLANT A | 2009/12/09 05:32 | WS | | | 89 | | | | | | | 0 | 25 | 26 | 89 | | 68 | 85 | 86 | 86 | 89 | | 898 | 698 |
| PLANT A | 2009/12/12 05:26 | HS | | | 103 | 199 | | | | | | 0 | 25 | 26 | 103 | 199 | 75 | 91 | 92 | 92 | 95 | | 839 | 777 |
| PLANT A | 2009/12/13 05:02 | HS | | | 132 | 240 | 760 | | | | | 0 | 26 | 27 | 132 | 240 | 46 | 60 | 61 | 62 | 64 | | 1033 | 1033 |
| PLANT A | 2009/12/14 05:23 | HS | 106 | | | | 0 | 27 | 27 | 106 | 114 | 37 | 63 | 63 | 106 | | 83 | 98 | 99 | 100 | 103 | 168 | 984 | 936 |
| PLANT A | 2009/12/21 03:00 | HS | 242 | 249 | | | 151 | 178 | 179 | 242 | 249 | 0 | 32 | 32 | 181 | 188 | 84 | 102 | 110 | 97 | 111 | 258 | 859 | 804 |
| PLANT A | 2009/12/25 02:01 | HS | 371 | 1021 | | | 0 | 26 | 30 | 240 | 245 | 211 | 237 | 237 | 371 | 1021 | 98 | 128 | 136 | 133 | 184 | 431 | 839 | 812 |
| PLANT A | 2009/12/31 05:00 | HS | 121 | 127 | | | 0 | 26 | 26 | 121 | 127 | 36 | 62 | 64 | 121 | 127 | 36 | 51 | 52 | 53 | 68 | 146 | 993 | 945 |
| PLANT A | 2010/01/02 18:00 | HS | | | 85 | 91 | 0 | 26 | 26 | 85 | 91 | 86 | | | | | 41 | 57 | 58 | 59 | 62 | | 1018 | 1002 |
| PLANT A | 2010/01/13 06:05 | HS | | | 62 | 696 | 177 | | | | | 0 | 26 | 26 | 62 | 696 | 41 | 56 | 57 | 57 | 61 | | 1030 | 1023 |
| PLANT A | 2010/01/29 02:02 | HS | 317 | 875 | | | 213 | 239 | 239 | 217 | 875 | 0 | 26 | 27 | 297 | 363 | 94 | 131 | 132 | 135 | 154 | 361 | 862 | 860 |
| PLANT A | 2010/02/22 03:26 | WS | 217 | 221 | | | 123 | 149 | 152 | 215 | 221 | 0 | 27 | 59 | 215 | 221 | 95 | 117 | 119 | 96 | 136 | 237 | 662 | 527 |
| PLANT A | 2010/03/01 02:35 | HS | 266 | 1019 | | | 190 | 217 | 218 | 266 | 1019 | 0 | 26 | 27 | 208 | 215 | 87 | 109 | 110 | 93 | 202 | 1025 | 910 | 875 |
| PLANT A | 2010/03/14 20:23 | CS | | | | | 0 | 28 | 29 | | | 28 | 57 | 58 | | | | | | | | | 178 | 107 |
| PLANT A | 2010/03/18 02:00 | HS | 360 | 366 | | | 0 | 26 | 27 | 299 | 306 | 279 | 307 | 309 | 359 | 376 | 115 | 175 | 202 | 206 | 206 | 378 | 849 | 877 |
| PLANT A | 2010/03/20 04:09 | HS | 199 | 853 | | | 0 | 27 | 27 | 171 | 177 | 113 | 139 | 141 | 199 | 853 | 75 | 93 | 94 | 96 | 176 | 858 | 890 | 768 |
| PLANT A | 2010/03/26 05:02 | CS | | | 196 | 202 | 0 | 26 | 30 | 196 | 202 | | | | | | 94 | 113 | 113 | 113 | 119 | | 664 | 382 |
| PLANT B | 2010/01/06 15:10 | HS | 1183 | | | | 0 | 31 | 76 | 614 | 952 | 856 | 1062 | 1065 | 1183 | 1189 | 127 | 418 | 422 | 150 | 495 | 1194 | 1022 | 1029 |
| PLANT B | 2010/01/20 17:46 | WS | | | 110 | | | | | | | 0 | 27 | 28 | 107 | 112 | 80 | 96 | 97 | 98 | 110 | | 858 | 671 |
| PLANT B | 2010/01/22 04:27 | WS | | | 150 | 157 | | | | | | 0 | 27 | 27 | 150 | 167 | 79 | 94 | 96 | 96 | 125 | | 762 | 540 |
| PLANT B | 2010/01/25 03:21 | WS | 224 | 279 | | | 126 | 152 | 155 | 224 | 279 | 0 | 26 | 30 | 223 | 253 | 94 | 115 | 116 | 128 | 136 | 258 | 558 | 552 |
| PLANT B | 2010/01/28 13:53 | WS | | | 190 | 279 | | | | | | 0 | 27 | 27 | 190 | 279 | 81 | 98 | 100 | 102 | 173 | | 690 | 462 |
| PLANT B | 2010/01/29 05:26 | HS | 118 | 129 | | | 0 | 27 | 31 | 119 | 129 | 38 | 65 | 65 | 118 | 129 | 85 | 102 | 102 | 102 | 105 | 135 | 956 | 875 |
| PLANT B | 2010/02/16 14:57 | CS | 243 | 249 | | | 102 | 127 | 130 | 243 | 249 | 0 | 26 | 27 | 243 | 248 | 93 | 141 | 141 | 153 | 198 | 259 | 343 | 227 |
| PLANT B | 2010/02/22 03:21 | WS | 218 | 224 | | | 0 | 25 | 59 | 218 | | 120 | 148 | 149 | 218 | 224 | 92 | 111 | 112 | 122 | 136 | 240 | 594 | 521 |
| PLANT B | 2010/03/06 13:00 | WS | | | 198 | 385 | | | | | | 0 | 28 | 28 | 198 | 385 | 75 | 93 | 94 | 95 | 179 | | 706 | 471 |
| PLANT B | 2010/03/08 04:06 | WS | 169 | 175 | | | 82 | 109 | 109 | 169 | | 0 | 28 | 28 | 168 | 176 | 73 | 88 | 89 | 89 | 152 | 196 | 742 | 538 |
| PLANT B | 2010/03/15 05:34 | HS | 113 | 160 | | | 0 | 29 | 28 | 113 | 160 | 33 | 59 | 61 | 113 | 160 | 63 | 82 | 83 | 84 | 87 | 160 | 981 | 915 |

*FIG. 3*

FIG. 4

FIG. 5

FIG. 6

**HOT START TIME**

**WARM START TIME**

**COLD START TIME**

**OVERALL FLEET STATISTICS**

| STARTUP TYPE | HOT | WARM | COLD |
| --- | --- | --- | --- |
| AVG | 84.49 | 148.53 | 190.44 |
| MEDIAN | 81 | 169 | 221 |
| STD DEV | 41.64 | 78.33 | 122.73 |

**USER FLEET STATISTICS**

| STARTUP TYPE | HOT | WARM | COLD |
| --- | --- | --- | --- |
| AVG | 71.93 | 131.06 | 175.95 |
| MEDIAN | 79 | 153.5 | 240.5 |
| STD DEV | 35.73 | 77.44 | 147.93 |

*FIG. 7*

23

FIG. 8

FIG. 9

EP 2 521 083 A1

## SITE STATISTICS

CUSTOMER :                    SITE : SITE ATLAS NAME_385              CONFIGURATION : 71FA+E

FLEET RANK

| 72% | 10% | 63% |
| RAM | AGILITY | EFFICIENCY |

AVAILIBILITY               SERVICES     SUPPORTING DATA

TRIPS/1000 FIRED HRS       SERVICES     SUPPORTING DATA

RELIABILITY               SERVICES     SUPPORTING DATA

*FIG. 10*

EP 2 521 083 A1

1100

FIG. 11

1200

SPECIFIC SCORECARD AND ANALYTICS APPLICATION EXAMPLE

1202
FLEET SCORECARD MODULE

1204
AVERAGE HOURS, STARTS AND TRIPS MODULE

1206
LOAD PROFILE MODULE

1208
STARTS & TRIPS PER 1000 FIRED HOURS MODULE

1210
STARTS TIME STATISTICS MODULE

1212
STARTUP RELIABILITY MODULE

1214
RELIABILITY AND AVAILABILITY (RAM) MODULE

1216
GAS TURBINE PERFORMANCE STATISTICS MODULE

1218
OFFLINE WATERWASH OPTIMIZER MODULE

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

ONEWAY ANALYSIS OF MED_LEAD_ECM BY CLUSTER

FIG. 25

Europäisches
Patentamt

European
Patent Office

Office européen
des brevets

**EUROPEAN SEARCH REPORT**

Application Number

EP 12 16 6062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 | 1-15 | INV. G06Q30/06 |
| L | * Statement in accordance with the Notice from the European Patent Office dated 1 october 2007 concerning business methods (OJ 11/2007; p592-593) The claimed subject-matter with due regard to the description and drawings, relates to processes and methods comprised in the list of subject-matter and activities excluded from patentability under Art.52(2) and (3) EPC. The applicant is advised that in accordance with the established practice of the EPO, no search need to be performed in respect of those aspects of the claimed invention. The only identifiable technical aspects of the claimed invention relate to the use of conventional, general-purpose data processing technology (data input/retrieval, data correlation/selection, data generation and output) for processing data of an inherently non-technical nature (administrative rule of benchmarking | | TECHNICAL FIELDS SEARCHED (IPC) G06Q |

The present search report has been drawn up for all claims

| Place of search | Date of completion of the search | Examiner |
|---|---|---|
| The Hague | 12 July 2012 | Thiam, Mansour |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................................
& : member of the same patent family, corresponding
    document

EPO FORM 1503 03.82 (P04C01)

| | Europäisches Patentamt<br>European Patent Office<br>Office européen des brevets | **EUROPEAN SEARCH REPORT** | Application Number<br>EP 12 16 6062 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | operational data in a power plant). The information technology employed is considered to have been generally known as it was widely available to everyone at the date of filing/priority of the present application. The notoriety of such prior art cannot reasonbly be contested: No documentary evidence was therefore considered required. *<br><br>----- | | |
| | | | TECHNICAL FIELDS SEARCHED (IPC) |

The present search report has been drawn up for all claims

| Place of search | Date of completion of the search | Examiner |
|---|---|---|
| The Hague | 12 July 2012 | Thiam, Mansour |

EPO FORM 1503 03.82 (P04C01)